# EUROPEAN PATENT SPECIFICATION

(11) **EP 1 884 130 B1**
(45) Date of publication and mention of the grant of the patent: **20.10.2010**
(21) Application number: 06759183.4
(22) Date of filing: 08.05.2006
(51) Int. Cl.: H04W 8/06

(54) **DYNAMIC GENERATION OF CSI FOR INBOUND ROAMERS**
DYNAMISCHE ERZEUGUNG VON CSI FÜR ANKOMMENDE ROAMER
GÉNÉRATION DYNAMIQUE DE CSI POUR ABONNÉS ITINÉRANTS ENTRANTS

(30) Priority: 09.05.2005 US 679444 P
(43) Date of publication of application: 06.02.2008
(73) Proprietor: Roamware, Inc., San Jose, CA 95128 (US)
(72) Inventor: JIANG, Yue, Jun, Danville, CA 94506 (US)
(74) Representative: Wallis, Helen Frances Mary
(86) International application number: PCT/US2006/017481
(87) International publication number: WO 2006/121894

(56) References cited:
- EP-A- 1 389 024
- EP-A- 1 622 403
- WO-A-00/56085
- WO-A-01/65884
- WO-A2-2004/075579
- GB-A- 2 424 493
- US-A1- 2003 072 425
- "Digital cellular telecommunications system (Phase 2+); Customised Applications for Mobile network Enhanced Logic (CAMEL) Phase 2; Stage 2 (3GPP TS 03.78 version 7.8.1 Release 1998); ETSI TS 101 441" ETSI STANDARDS, LIS, SOPHIA ANTIPOLIS CEDEX, FRANCE, vol. 3-CN2;SMG3, no. V7.8.1, 1 August 2002 (2002-08-01), XP014016036 ISSN: 0000-0001
- BECHER R ET AL: "CAMEL: THE IMPACT OF PERSONAL COMMUNICATIONS ON INTELLIGENT NETWORKS" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997; [ISS. WORLD TELECOMMUNICATIONS CONGRESS. (INTERNATIONAL SWITCHING SYMPOSIUM)], TORONTO,, 21 September 1997 (1997-09-21), pages 225-233, XP000704472

## Description

### Related Applications

This application claims priority from United States Provisional Patent Application No. 60/679,444 entitled Dynamic originating CAMEL approach for Implementing Call Control Services for Inbound Roamers, filled May 09, 2005.

### BACKGROUND OF THE INVENTION

### Field of the Invention

The present invention generally relates to inbound roamers. More specifically, the present invention relates to generation of MO-CSI(s) and implementation of value added call control services for the inbound roamers.

In current state of the art wireless telecommunications, one important service offered users by public mobile network operators is international roaming - the ability to use their mobile phones when visiting in areas served by foreign network operators. Specifically in international roaming, a mobile operator is interested in inbound roaming revenue, which is generated by the mobile operator when a user subscribed to a home mobile operator visits the mobile operator's network. To increase the inbound roaming revenue, mobile operators offer various value added call control services to the inbound roamers. Among those value added call control services are roaming home short-code, optimal routing, misdialed digit correction, CLI guarantee and prepaid local number.

In state-of-the-art roaming home short-code services, an inbound roamer dials a home network short-code, such as, customer care, voicemail, directory, or emergency at a visiting network. Such a service then uses a database to translate the short-code into the home or visiting country long number. In the optimal routing service, an inbound roamer may call another inbound roamer in the same visiting network. The call may be directed to the called number via a local trunk route instead of an international trunk route. In the misdialed digit correction service, a misdialed number by an inbound roamer (for example, due to a wrong or missing international dialing prefix) may be intelligently corrected and the call may be completed using the correct number. In the CLI guarantee service, an international call made by an inbound roamer delivers caller ID guarantee. In the prepaid local number service, a virtual prepaid local SIM service is provided to an inbound roamer without changing the home SIM card, thereby providing a win-win situation for the inbound roamer, the visiting network that deploys this service, and the home operator.

Various techniques are available to implement one or more of the aforesaid value-added call control services. One such technique uses an Integrated Services Digital Network User Part (ISUP) based node, sometimes referred to as a service node. In an example of this technique, a voice trunk equipped with the service node is used. In another example, an ISUP loop-back at originating Mobile Switching Centre (MSC) is used to route an inbound roamer's call control signaling through the service node, thereby optimally applying various call service logics. In both the cases, the circuit resources are heavily utilized and the switches may not be able to provide finer control of dialing digits analysis. Further, the ISUP signaling does not contain an international Mobile Subscriber Identity (IMSI) of the calling inbound roamer. Thus, the service node is unable to generate the Call Detail Records (CDR) for the inbound roamer at the switch side. The IMSI may be determined from a Home Public Mobile Network's (HPMN) Home Location Register (HLR) by using Mobile Application Part (MAP) signaling on Mobile Subscriber ISDN (MSISDN) of the calling inbound roamer.

In accordance with another known technique, Mobile Application Part Send Routing Information (MAP SRI) signaling is used to implement one or more of the value added call control services. In this case, the switch may be configured to issue MAP SRI on certain selected numbers for the inbound roamers. When the MAP SRI signaling reaches the service node, the service node applies various application logics and returns a number to the switch. The MAP signaling approach does not need circuit resources equivalent to the ISUP signaling technique. However, it is limited by the application logic and billing, as it does not present the calling party number or IMSI of the inbound roamer or the call duration.

In accordance with yet another available technique, the MAP SRI signaling technique is combined with the ISUP signaling technique. For example, the switch first sends the MAP SRI signaling on the called number to the service node. The service node then checks the called number to determine whether the application logic is applicable. If it is not applicable, the service node returns the original number. However, if applicable, the service node returns a prefixed called number so the switch may subsequently route the call to the service node via the ISUP signaling. This hybrid approach reduces ISUP signaling resource utilization. However, it is still problematic, since the MAP SRI signaling technique does not contain the calling party which may be important for some applications, for example, to determine whether the called number is relevant or not (e.g. an application could require that the calling number be from England). Further, the ISUP party does not contain the IMSI of the calling party required to generate billing CDR. Moreover, it may still not generate the correct CDR at the switch side. That is, even though the applications might be able to find the IMSI from the calling number in the ISUP signaling to generate the CDR at the application side, one would still require billing reconciliation with the switch CDR.

ln yet another state-of-the-art technique, an intelligent Network (IN) signaling is used to implement the call control services for inbound roamers. The switch is configured to initiate IN messages on the called number to the service node (or service control point). Thereafter, the service node applies various application logics to interact with the switch. While the IN approach does not heavily utilize the circuit resources and may generate billing for the call control services, it is switch dependent. Some switches might present the IMSI of the calling party. Some switches support certain IN functions allowing billing to be generated at the switch. This eliminates the need to generate billing at the service node. However, some switches do not provide IMSI of the calling party or do not support IN functions.

The IN approach is disadvantageous because the operators often have to pay license fee for the switch dependent IN specification for deploying the IN applications other than those from the switch vendor. The IN-approach of the prior art also is not typically capable to dynamically define trigger a profile for inbound roamers - only for local subscribers.

There is a need in the art for an alternative standard based approach that is cost-effective and utilizes minimum circuit resources. Further, it is desirable that the service node operates in a switch independent environment, performs various kinds of application logics and interacts with the switch using MSISDN of the calling party and the IMSI of the inbound roamer.

In some situations, it further may be more advantageous (e.g. changing calling number) to use IN approach rather than CAMEL. The dynamic approach presented here can be similarly applied to provide dynamic IN trigger profiles (e.g. routing category) for inbound roamers.

European Patent Application No. 02255512.2 (Publication EP1389024) describes a method of setting up an application initiated call to a mobile station within a CAMEL Network. According to the method, the call is initiated by an open service architecture application which causes a message to be produced which indicates to the network that the mobile station is now available to make a ring-back call connection. The network then sets up the call connection in response to this message.

ETSI Technical Specification No. 101441, version 7.8.1 (2002-08) specifies the stage two description for the second phase of the CAMEL feature which supports mobile originated and forwarded calls, mobile terminating calls, anytime interrogation, suppression of announcements, announcements, in band user interaction, charging features, supplementary service invocation notifications, USSD interaction with the gsmSCF and North America carrier selection.

### SUMMARY OF THE INVENTION

The present invention is directed to a system, method and computer program product for generating a Mobile Originating Customized Applications for Mobile network Enhanced Logic (CAMEL) Subscriber Information (MO- CSI) of an inbound roamer that satisfies the need. The system includes a roamers database to store at least one inbound roamer record. The inbound roamer record comprises at least the International Mobile Subscriber Identity (IMSI) of the inbound roamer. Further, the system includes a detection block to detect whether generation of the MO-CSI is required for the inbound roamer and a MO-CSI generation block to generate the MO-CSI of the inbound roamer based on at least a CAMEL phase supported by a Home Public Mobile Network (HPMN), if the generation of the MO-CSI is required. The system also includes a provisioning block to provision at least the generated MO-CSI at a Visited Public Mobile Network (VPMN) Visited Location Register (VLR) or Serving GPRS Support Node (SGSN). In this document, we need not distinguish between VLR and SGSN for one skilled in the art to understand that some CSI will be VLR specific and some will be SGSN specific.

The present invention also provides a method of generating a Mobile Originating Customized Applications for Mobile network Enhanced Logic (CAMEL) Subscriber Information (MO-CSI) of an inbound roamer. The method comprises storing at least one inbound roamer record, such that the inbound roamer record comprises at least the International Mobile Subscriber Identity (IMSI) of the inbound roamer. The method further comprises detecting whether generation of the MO-CSI is required for the inbound roamer and generating the MO-CSI of the inbound roamer based on at least a CAMEL phase supported by a Home Public Mobile Network (HPMN), if the generation of the MO-CSI is required. Also, the method includes provisioning at least the generated MO-CSI at the Visited Public Mobile Network (VPMN) Visited Location Register (VLR).

### Brief Description of Drawings

In the drawings, the same or similar reference numbers identify similar elements or acts.

FIG. 1 illustrates a block diagram of a system in accordance with an embodiment of the present invention.

FIG. 2 illustrates a block diagram of a dynamic CAMEL gateway in accordance with an embodiment of the present invention.

FIG. 3 illustrates a block diagram of the dynamic CAMEL gateway in accordance with another embodiment of the present invention.

FIG. 4 illustrates the dynamic CAMEL gateway coupled to a service node in accordance with an embodiment of the present invention.

FIG. 5 illustrates a flowchart for providing a MO-CSI of an inbound roamer in accordance with an embodiment of the present invention.

FIG. 6 illustrates a flowchart for generation of the MO-CSI in accordance with an embodiment of the present invention.

FIG. 7 illustrates a flow diagram of a short-code service for an inbound roamer in accordance with an embodiment of the present invention.

FIG. 8 illustrates a flow diagram of a misdialed digits correction service for an inbound roamer in accordance with an embodiment of the present invention.

FIG. 9 illustrates a flow diagram of a CLI guarantee service for an inbound roamer in accordance with an embodiment of the present invention.

FIG. 10 illustrates a flow diagram of a prepaid local number service for an inbound roamer in accordance with an embodiment of the present invention.

FIG. 11 illustrates a system used for an SMS delivery of an inbound roamer in accordance with an embodiment of the present invention.

FIG. 12 illustrates a system supporting a prepaid local GPRS service in accordance with an embodiment of the present invention.

FIG. 13 illustrates a flow diagram of an optimal routing service for an inbound roamer in accordance with an embodiment of the present invention.

FIG. 14 illustrates a flow diagram of a missed call alert service for an inbound roamer in accordance with an embodiment of the present invention.

### Detailed Description of the Invention

In the foregoing description, the HPMN is a network to which an inbound roamer is originally subscribed while the VPMN is a network where the inbound roamer is situated while he is roaming.

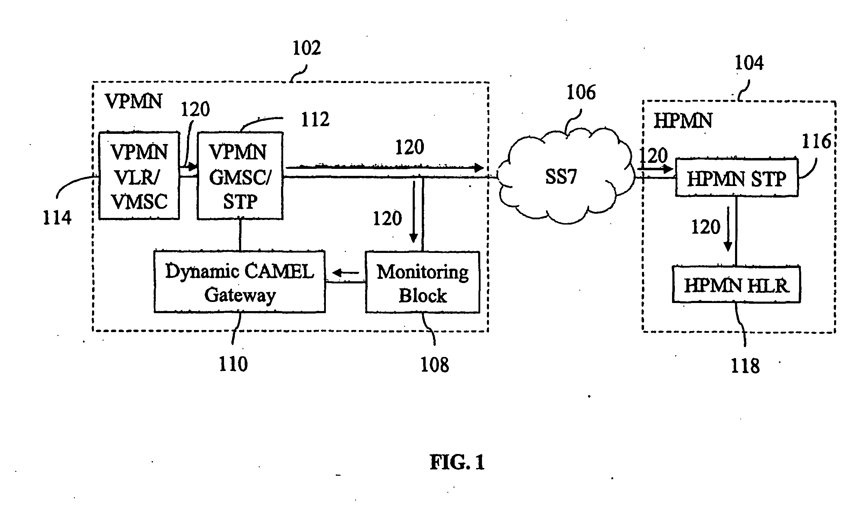

FIG. 1 illustrates a block diagram of a system in accordance with an embodiment of the present invention. The system comprises VPMN 102 communicating with HPMN 104 via a SS7 interface 106. VPMN 102 comprises a monitoring block 108 coupled to a dynamic CAMEL gateway 110, a VPMN GMSC/STP 112, and a VPMN VLR/VMSC 114. Dynamic CAMEL gateway 110 and VPMN VLR/VMSC 114 are coupled to VPMN GMSC/STP 112. HPMN 104 comprises a HPMN STP 116 and a HPMN HLR 118. VPMN GMSC/STP 112 communicates with HPMN STP 116 via SS7 interface 106. HPMN HLR 118 is coupled to HPMN STP 116. In accordance with an embodiment of the present invention, gsmSSF may be integrated with VPMN VLR/VMSC 114. Although the system is described using essential components, however, it will be obvious to a person skilled in the art that the system includes various other components not shown in the figure, for the purpose of clarity.

In an embodiment of the present invention, the interface between monitoring block 108 and dynamic CAMEL gateway 110 may be a TCP/IP based interface. Monitoring block 108 and dynamic CAMEL gateway 110 may belong to different vendors. However, monitoring block 108 and dynamic CAMEL gateway 110 may belong to a same vendor.

In accordance with an embodiment of the present invention, monitoring block 108 and dynamic CAMEL gateway 110 may be physically integrated in the same box. In accordance with another embodiment of the present invention, monitoring block 108 and dynamic CAMEL gateway 110 may be installed separately.

VPMN VLR/VMSC 114 sends a MAP transaction message 120 to HPMN HLR 118 when an inbound roamer registers at VPMN VLR/VMSC 114. MAP transaction message 120 includes a MAP Location Update transaction. Monitoring block 108 taps international roaming links employed by SS7 interface 106 and used for sending MAP transaction message 120. Monitoring block 108 monitors MAP transaction message 120 and informs dynamic CAMEL gateway 110 when it detects a successful MAP Location Update. In accordance with an embodiment of the present invention, the monitoring may be in the path of signaling. In accordance with another embodiment of the present invention, monitoring may be non-intrusive. Further, monitoring block 108 provides details of the inbound roamer to dynamic CAMEL gateway 110. The details provided by monitoring block 108 include at least one of an International Mobile Subscriber Identity (IMSI), the HPMN HLR, the VPMN VLR/VMSC, a Mobile Station International ISDN Number (MSISDN), a supported CAMEL phase by the HPMN, all CSIs (for example, O-CSI, SS-CSI, VT-CSI and the like) and combination thereof.

If the details do not contain a MO-CSI, dynamic CAMEL gateway 110 generates the MO-CSI of the inbound roamer. In accordance with an embodiment of the present invention, the MO-CSI comprises a service key and an address of a Global System for Mobile communication Service Control Function (gsmSCF). The gsmSCF address may be the address of dynamic CAMEL gateway 110 or an existing gsmSCF of VPMN 102. Dynamic CAMEL gateway 110 provides the generated MO-CSI to VPMN VLR/VMSC 114 via VPMN GMSC/STP 112. Dynamic CAMEL gateway 110 maintains records relating to at least one HPMN, CAMEL phases supported by the HPMN, and at least one inbound roamer details.

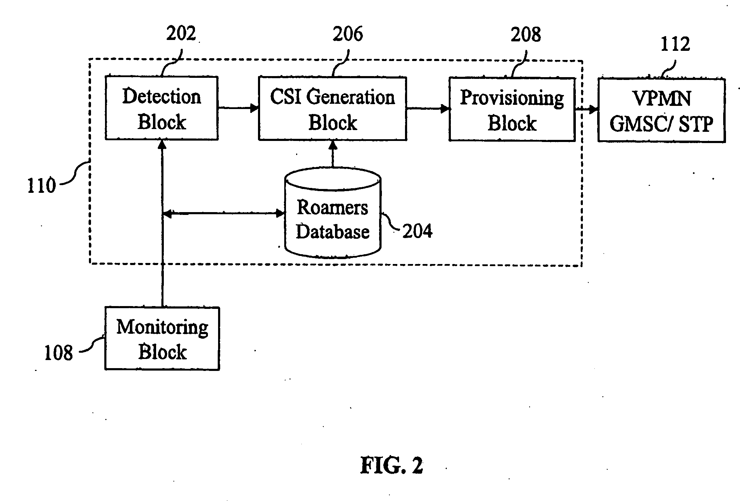

FIG. 2 illustrates a block diagram of dynamic CAMEL gateway 110 in accordance with an embodiment of the present invention. Dynamic CAMEL gateway 110 comprises a detection block 202, a roamers database 204, a CSI generation block 206, and a provisioning block 208. Provisioning block 208 is coupled to VPMN GMSC/STP 112. In an embodiment of the present invention, monitoring block 108 communicates with detection block 202 and roamers database 204 via TCP/IP protocol.

Detection block 202 detects whether generation of the MO-CSI is required for the inbound roamer after monitoring block 108 communicates a successful MAP location update. Monitoring block 108 also provides details of the inbound roamer using the IMSI of the inbound roamer from roamers database 204. Roamers database 204 stores at least one inbound roamer record, such that the inbound roamer record comprises at least the IMSI of the inbound roamer. Additionally, the inbound roamer record may include the HPMN HLR, the VPMN VLR/VMSC, a Mobile Station International ISDN Number (MSISDN), a supported CAMEL phase by the HPMN, all CSIs and combinations thereof. Detection block 202 identifies whether the inbound roamer record provided by monitoring block 108 contains the MO-CSI of the inbound roamer in response to the successful Location Update (LUP) of the inbound roamer. For example, it checks whether HPMN HLR 118 has sent the required MO-CSI to VPMN VLR/VMSC 114.

CSI generation block 206 generates the MO-CSI of the inbound roamer based on at least the CAMEL phase supported by the HPMN, if the provisioning of the CSI is required as communicated by detection block 202. CSI generation block 206 retrieves IMSI of the inbound roamer stored in the inbound roamer record of roamers database 204.

Provisioning block 208 provides the generated CSI of the inbound roamer to VPMN VLR/VMSC 114 via VPMN GMSC/STP 112. Provisioning block 208 sends a stand-alone Mobile Application Part (MAP) Insert Subscriber Data (ISD) on the inbound roamer's IMSI to provision at least the generated MO-CSI of the inbound roamer to VPMN VLR/VMSC 114.

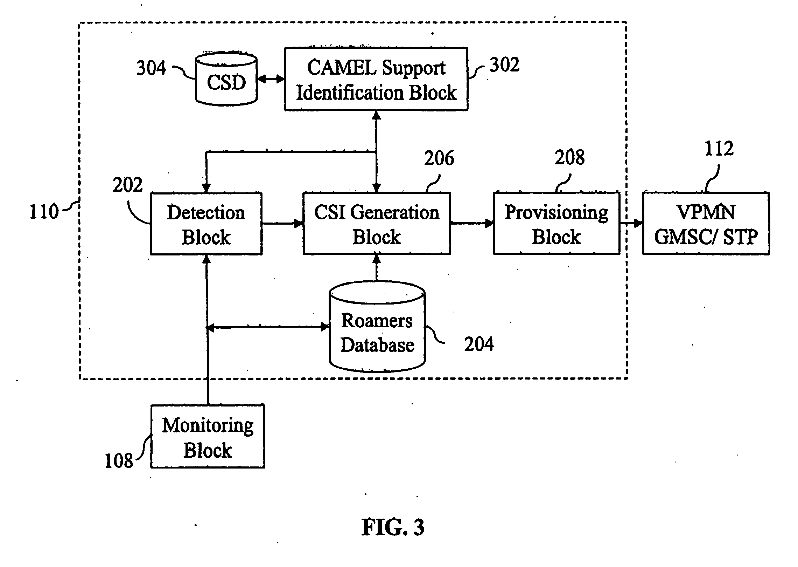

FIG. 3 illustrates a block diagram of dynamic CAMEL gateway 110 in accordance with another embodiment of the present invention. In addition to the blocks described in FIG. 2, dynamic CAMEL gateway 110 further includes a CAMEL support identification block 302 coupled to CSI generation block 206 and detection block 202. CAMEL support identification block 302 maintains a CAMEL support database 304 for storing information of the CAMEL phases supported by at least one HPMN.

Before CSI generation block 206 generates the MO-CSI, CAMEL support identification block 302 checks whether HPMN 104 of the inbound roamer supports CAMEL and identifies the phase of CAMEL supported by HPMN 104 by using the information stored in CAMEL support database 304. CSI generation block 206 generates the MO-CSI using the information of the CAMEL phases stored in CAMEL Support Database (CSD) 304. It will be apparent to one skilled in the art that CAMEL support identification block 302 may employ various techniques to identify the phase of CAMEL supported by HPMN 104. For example, monitoring block 108 may check CAMEL phases supported by HPMN 104 in addition to monitoring successful location update transaction of the inbound roamer with VPMN 102.

The MO-CSI sent by dynamic CAMEL gateway 110 does not contain trigger criteria for CAMEL phase 1. For CAMEL phase 2, the MO-CSI sent by dynamic CAMEL gateway 110 contains trigger criteria. The exact form of criteria depends on the applications deployed by a VPMN operator.

The MO-CSI contains at least one of O-CSI, TDP-criteria for O-CSI, SS-CSI and TIF-CSI, if CAMEL support identification block 302 identifies HPMN 104 to support one of CAMEL phases 1, 2 or 3. The complete set of the MO-CSI may be sent even if only one MO-CSI has changed in case of a stand-alone MAP Insert Subscriber Data (ISD). The omitted elements of the above set of the MO-CSI are withdrawn from the VPMN VLR. Thus, if the VPMN VLR has already received some non-O-CSI (e.g. SS-CSI), while dynamic CAMEL gateway 110 has to send an additional MO-CSI; dynamic CAMEL gateway 110 resends the entire set in one dialogue. Dynamic CAMEL gateway 110 obtains all MO-CSI information from monitoring block 108. Additionally, for CAMEL phase 3, the MO-CSI may contain at least one of D-CSI, VT-CSI, SMS-CSI, and M-CSI. Also, TDP-Criteria for the VT-CSI may be associated with the VT-CSI.

Although the present invention is described using GSM network, it is applicable to other wireless networks including GPRS and WIN-based CDMA. First, two phases of CAMEL are supported by GSM only, while phase 3 and above are supported by GSM and GPRS. Thus, the MO-CSI for CAMEL phase 3 includes GPRS-CSI and TDP-Criteria for the GPRS-CSI. The VPMN VLR (or GPRS SGSN) bound MO-CSI is sent after MAP location update or when any information in the applicable MO-CSI in HPMN HLR 118 has been changed.

Further, in any CAMEL phase, if VPMN VLR/VMSC 114 has already received a MO-CSI (e.g. O-CSI, SS-CSI, VT-CSI), dynamic CAMEL gateway 110 does not send additional MO-CSI of the same type since the VPMN VLR CAMEL interaction with a HPMN SCP via the same type of MO-CSI may be relayed through dynamic CAMEL gateway 110 to the HPMN SCP.

If the VPMN VLR CSI omits MO-CSI in the MAP ISD operation from the HPMN HLR, VPMN VLR/VMSC 114 keeps the previously stored VLR MO-CSI. Within one dialogue, subsequent received data is interpreted as add-on data. If VPMN VLR/VMSC 114 detects overlapping in the information received within a dialogue, it sends an error, for example, Unexpected Data Value.

For provisioning the MO-CSI, provisioning block 208 sends the record of the MO-CSI in one dialogue after a successful location update (including GPRS) to VPMN VLR/VMSC 114. Provisioning block 208 sends the stand-alone MAP ISD to VPMN VLR/VMSC 114 containing the record of the MO-CSI of the inbound roamer. In accordance with an embodiment of the present invention, the record of the MO-CSI includes an IMSI and the MO-CSI or a set of MO-CSIs corresponding to the phase supported by HPMN 104 of the inbound roamer.

To send the stand-alone MAP ISD, dynamic CAMEL gateway 110 uses a SCCP Calling GT which depends on VPMN 102 network environment. In accordance with an embodiment of the present invention, dynamic CAMEL gateway 110 uses the VPMN GT. It is assumed that the VLR does not check its stored HLR address of the inbound roamer against the SCCP Calling GT of the stand-alone MAP ISD for the creation of an MO-CSI for an inbound roamer. In accordance with another embodiment of the present invention, dynamic CAMEL gateway 110 fakes HPMN HLR GT when it sends the stand-alone MAP ISD. The HPMN HLR GT is captured while monitoring the location update in the SCCP Calling Address of the stand-alone MAP ISD. However, it uses a special numbering plan (e.g. generic number) or a new translation type. VPMN GMSC/STP 112 is configured to route SCCP messages on a called party of this special numbering plan or translation type through dynamic CAMEL gateway 110. It will be appreciated by a person skilled in the art that other options relating to the use of SCCP calling GT are possible and fall within the scope of the patent.

Further, various blocks disclosed in conjunction with the disclosed embodiments of the present invention are logically unique entities. One or more of these blocks may be implemented on a single network node. Further, the functions performed by two or more of these blocks may be merged in to a single program code for implementation on a network node.

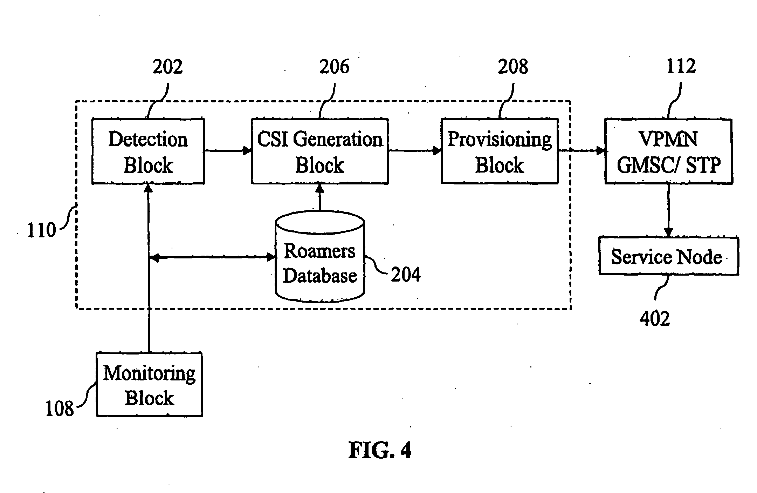

FIG. 4 illustrates dynamic CAMEL gateway 110 coupled to a service node 402 in accordance with an embodiment of the present invention. Service node 402 is coupled to dynamic CAMEL gateway 110 via VPMN GMSC/STP 112. Service node 402 implements call control services for the inbound roamer. Service node 402 may be a VPMN gsmSCF. The call control services include a short code dialing service, a misdialed digits correction service, a Calling Line Identification (CLI) guarantee service, a prepaid local number service, a missed call alert service, and an optimal routing service for the inbound roamer.

VPMN VLR/VMSC 114 receives a call from an inbound roamer for a called number. For example, VPMN VLR/VMSC 114 receives a call from an inbound roamer number (A) dialing a called number (B). VPMN VLR/VMSC 114 is configured to transfer a call control of the inbound roamer to service node 402. The call control is transferred via a CAMEL Application Part (CAP) Initiation Detection Point (IDP) protocol. The CAP IDP contains MO-CSI pointing to an address of service node 402. This ensures that the call from the inbound roamer is not passed onto the HPMN of the inbound roamer and the call routing is handled at the VPMN itself. Service node provides necessary information for the various call control services.

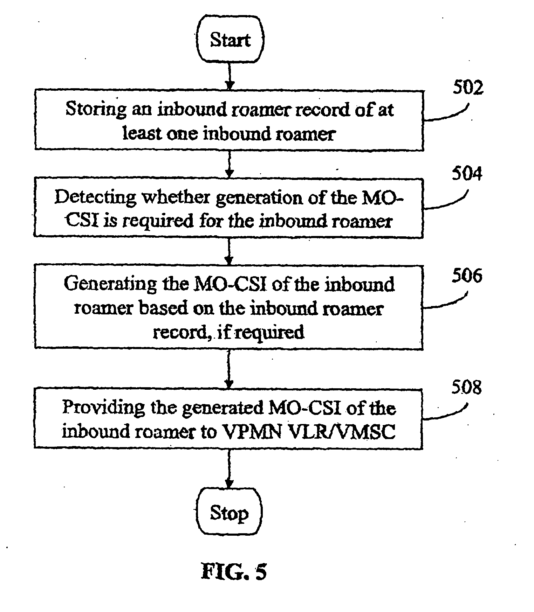

FIG. 5 illustrates a flowchart for providing a MO-CSI of an inbound roamer in accordance with an embodiment of the present invention. At step 502, the roamers database maintains at least one inbound roamer. The inbound roamer record comprises at least the International Mobile Subscriber Identity (IMSI) of the inbound roamer.

At step 504, the detection block detects whether generation of the MO-CSI is required for the inbound roamer in response to a successful MAP location update. The check determines whether the HPMN HLR has sent the required MO-CSI to the VPMN VLR/VMSC. At step 506, the CSI generation block generates the MO-CSI of the inbound roamer based on at least a CAMEL phase supported by the HPMN of the inbound roamer, if the generation of the MO-CSI is required. At step 508, the provisioning block provides the generated CSI of the inbound roamer to the VPMN VLR/VMSC.

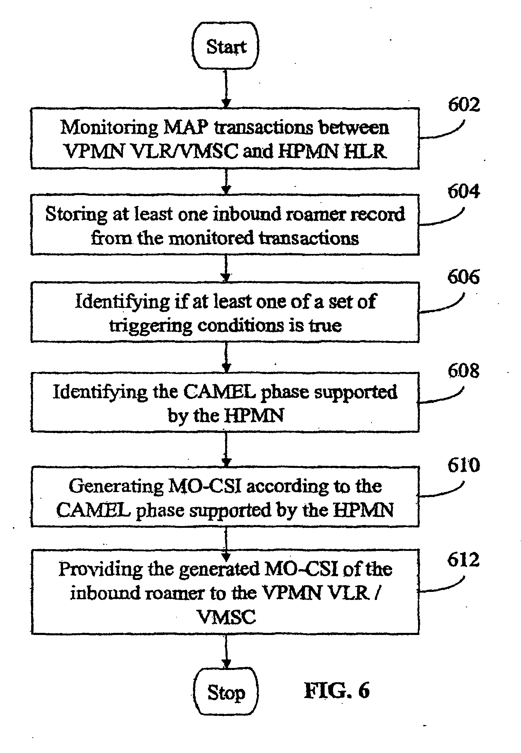

FIG. 6 illustrates a flowchart for generation of the MO-CSI in accordance with an embodiment of the present invention. When an inbound roamer registers with the VPMN VLR/VMSC, the VPMN VLR/VMSC sends the MAP transaction message to the HPMN HLR. The monitoring block monitors the MAP transaction message, for example location update, at step 602. At step 604, at least one inbound roamer record is stored from the monitored transactions. The inbound roamer record contains at least the IMSI of the inbound roamer. Additionally, the inbound roamer record includes the HPMN HLR, a VLR/VMSC, a Mobile Station International ISDN Number (MSISDN), HPMN supported CAMEL phases, all MO-CSIs (for example, O-CSI, SS-CSI, VT-GSI and the like) and combination thereof.

Next, the monitoring block determines if at least one triggering condition is true at step 606. The triggering conditions include successful location update determination, and whether provisioning of the MO-CSI is required for the inbound roamer at the VPMN VLR/VMSC. If the conditions in step 606 are true, the CAMEL phase supported by the HPMN is determined at step 608. The CSI generation block generates the MO-CSI according to the CAMEL phase supported by the HPMN at step 610. The dynamic CAMEL gateway maintains the information related to the CAMEL phases supported by at least one HPMN. The generation of MO-CSI is described in FIG. 3.

At step 612, the provisioning block provisions the generated MO-CSI at the VPMN VLR/VMSC by sending a stand-alone Mobile Application Part (MAP) Insert Subscriber Data (ISD). The MAP ISD is issued using IMSI of the inbound roamer.

The foregoing description describes some of the call control services provided to the inbound roamers using the present invention. In accordance with one embodiment, the VPMN gsmSSF may be an independent logical entity. In accordance with another embodiment it may be integrated with the VPMN VLR/VMSC. Similarly, the VPMN gsmSCF may be an independent logical entity or it may be integrated with the dynamic CAMEL gateway.

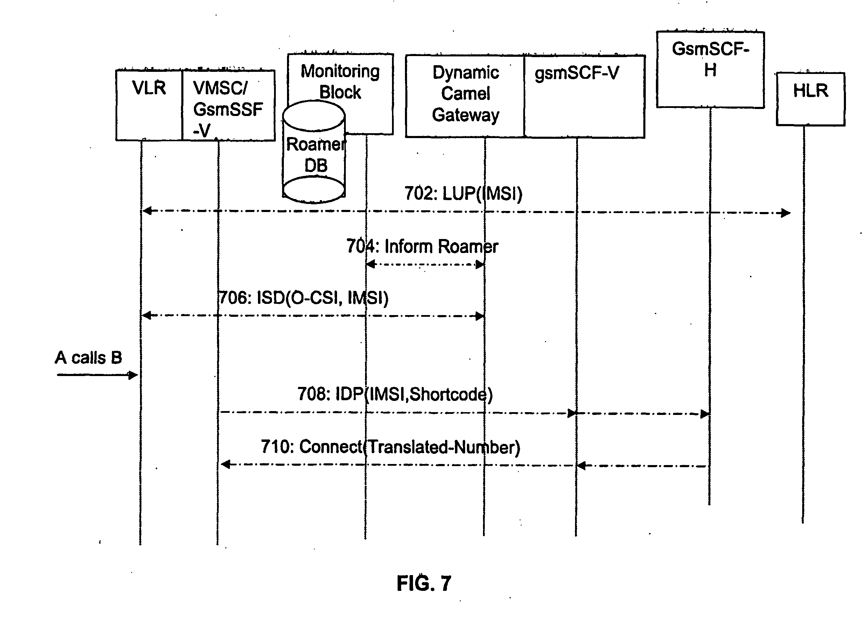

FIG. 7 illustrates a flow diagram of a short-code service for an inbound roamer in accordance with an embodiment of the present invention. At step 702, the monitoring block detects a successful location update at the CAMEL supporting VPMN of the inbound roamer. The monitoring block provides an inbound roamer record to the dynamic CAMEL gateway at step 704. The inbound roamer record includes the IMSI of the inbound roamer, the MO-CSI, the MSISDN, the HPMN HLR and the VPMN VLR. The dynamic CAMEL gateway detects that the inbound roamer record does not contain the MO-CSI of the inbound roamer. The dynamic CAMEL gateway provides the MO-CSI to the VPMN VLR of the inbound roamer by sending a stand-alone MAP ISD containing the O-CSI and IMSI of the inbound roamer to the VPMN VLR at step 706.

The O-CSI for VPMN CAMEL phase 1 does not contain TOP criteria. The O-CSI for VPMN CAMEL phase 2 and above contains the following TDP criteria

"The length of the dialed digits is less or equal than X (e.g. 6)"

When the inbound roamer (A) makes a short-code call to a called party (B), a VPMN gsmSSF transfers the call control via a CAP IDP containing the IMSI of A and the short-code of B to the dynamic CAMEL gateway or the VPMN gsmSCF at step 708. The VPMN gsmSCF checks a database containing translated long numbers corresponding to the short-code and returns the translated long number via a CAP Connect command at step 710. Optionally, the VPMN gsmSCF may communicate with a HPMN gsmSCF to obtain the translated long number and forward it to the VPMN gsmSCF.

In accordance with an embodiment of the present invention, for billing purposes, the VPMN gsmSCF/dynamic CAMEL gateway may set a switch CDR by using a CAP FCI (FurnishChargingInformation). The event triggers may be set via a CAP RRB (RequestReportBCSM) and events may be received via a CAP ERR (EventReportBCSM).

However, if the inbound roamer is already equipped with an O-CSI, a CAP relay may handle the call control via through a CAP relay proxy back to the HPMN gsmSCF.

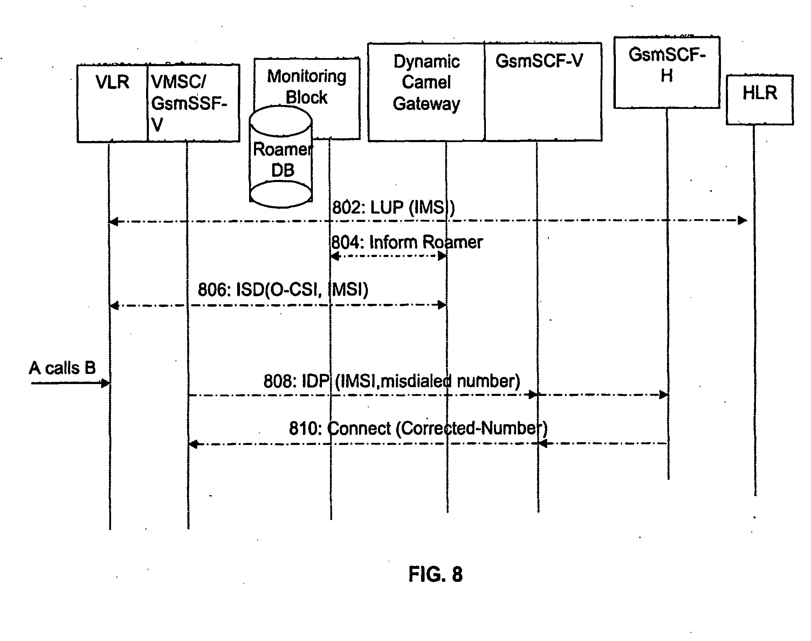

FIG. 8 illustrates a flow diagram for a misdialed digits correction service for an inbound roamer in accordance with an embodiment of the present invention. At step 802, the monitoring block detects a successful location update at the CAMEL supporting VPMN of the inbound roamer. The monitoring block provides an inbound roamer record to the dynamic CAMEL gateway at step 804. The inbound roamer record includes at least the IMSI of the inbound roamer, the MO-CSI, the MSISDN, the HPMN HLR and the VPMN VLR. The dynamic CAMEL gateway can detect that the inbound roamer record does not contain the MO-CSI of the inbound roamer. The dynamic CAMEL gateway can provide the MO-CSI to the VPMN VLR of the inbound roamer by sending a stand-alone MAP ISD containing the O-CSI and IMSI to the VPMN VLR at step 806.

The O-CSI for VPMN CAMEL phase 1 does not typically contain TOP criteria. The O-CSI for the VPMN CAMEL phase 2 and above contains the TDP criteria, for example,
1. "The dialed digits are not routable" for CAMEL phase 3
2. "The prefix of the dialed digits is HPMN IDD prefix" for CAMEL phase 2 and above
3. "The prefix of the dialed digits is HPMN CC NDC prefix and the number is not an international number" for CAMEL phase 2 and above.

When the inbound roamer (A) makes a misdialed digit call, the VPMN gsmSSF transfers the call control via a CAP IDP containing the IMSI of A and misdialed digits to the dynamic CAMEL gateway or the VPMN gsmSCF at step 808. The VPMN gsmSCF can return a CAP Connect command containing the corrected number to the VPMN gsmSSF at step 810. Optionally, the VPMN gsmSCF may communicate with the HPMN gsmSCF to obtain the correct number and forward it to the VPMN gsmSCF.

In accordance with an embodiment of the present invention, for billing purposes, the VPMN gsmSCF/dynamic CAMEL gateway may set a switch CDR by using the CAP FCI (Furnish Charging Information). Event triggers may be set via the CAP RRB (Request Report BCSM) and events may be received via the CAP ERB (Event Report BCSM).

However, if the inbound roamer is already equipped with an O-CSI, a CAP relay may handle the call control via through a CAP relay proxy back to the HPMN gsmSCF.

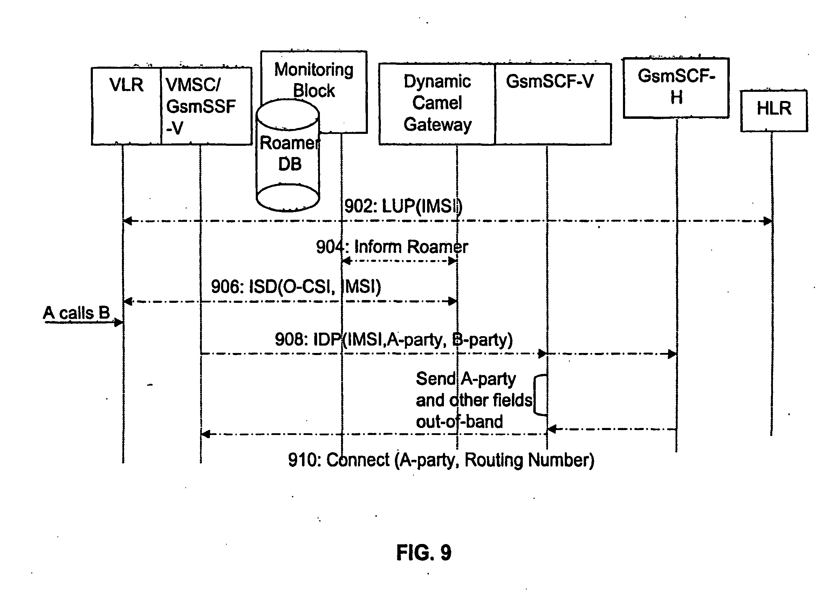

FIG. 9 illustrates a flow diagram of a CLI guarantee service for an inbound roamer in accordance with an embodiment of the present invention. At step 902, the monitoring block detects a successful location update at the CAMEL supporting VPMN of the inbound roamer. The monitoring block provides an inbound roamer record to the dynamic CAMEL gateway at step 904. The inbound roamer record includes the IMSI of the inbound roamer, the MO-CSI, the MSISDN, the HPMN HLR and the VPMN VLR. The dynamic CAMEL gateway can detect that the inbound roamer record does not contain the MO-CSI of the inbound roamer. The dynamic CAMEL gateway provides the MO-CSI to the VPMN VLR of the inbound roamer by sending a stand-alone MAP ISD containing the O-CSI and IMSI to the VPMN VLR at step 906. The exact trigger criteria in O-CSI may be any international number, HPMN number, short-code or just no criteria in case of CAMEL 1.

When the inbound roamer (A) makes an international call, the VPMN gsmSSF transfers the call control via a CAP IDP containing the inbound roamer's number, the IMSI and a called party number to the dynamic CAMEL gateway or the VPMN gsmSCF at step 908. The VPMN gsmSCF sends caller ID using an external IP network or out-of-band SMS signaling to another remote node and obtains a routing number. The HPMN gsmSCF returns the routing number to the VPMN gsmSSF via a CAP Connect command at step 910. The call made by the inbound roamer is routed to the remote node which may sync up the call by re-inserting the calling party information received from out-of-band SMS signaling.

In accordance with an embodiment of the present invention, for billing purposes, the VPMN gsmSCF/dynamic CAMEL gateway may set a switch CDR by using the CAP FCI (Furnish Charging Information). The event triggers may be set via the CAP RRB (Request Report BCSM) and events may be received via the CAP ERB (Event Report BCSM).

However, if the inbound roamer is already equipped with an O-CSI, a CAP relay may handle the call control via through a CAP relay proxy back to the HPMN gsmSCF.

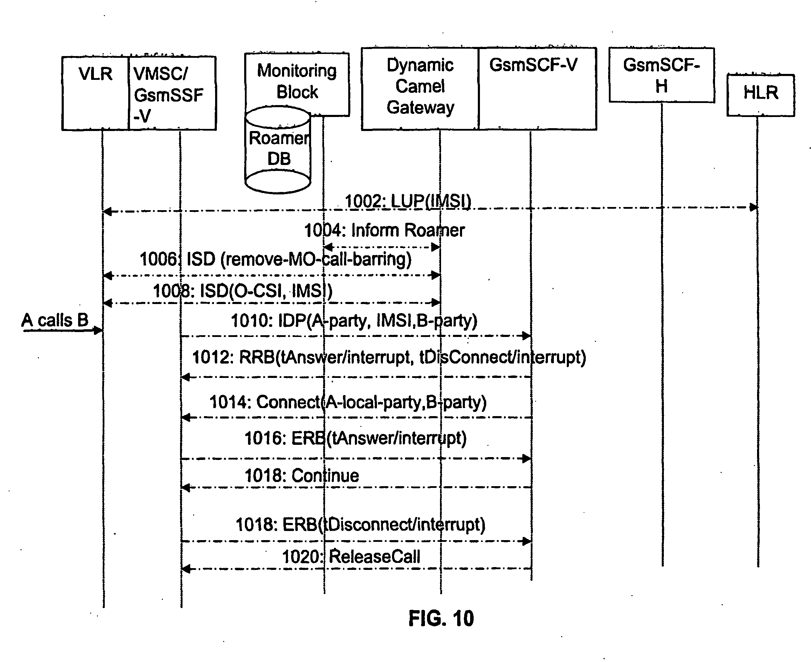

FIG. 10 illustrates a flow diagram of a prepaid local number service for an inbound roamer in accordance with an embodiment of the present invention. The embodiment describes a CAMEL implementation deployed by a VPMN operator for the Single IMSI and Multiple MSISDN (SIMM) roaming solution by offering a prepaid local number to the inbound roamer.

At step 1002, the monitoring block detects a successful location update at the CAMEL supporting VPMN of the inbound roamer. The monitoring block provides an inbound roamer record to the dynamic CAMEL gateway at step 1004. The inbound roamer record includes information typically comprised of the IMSI of the inbound roamer, MO-CSIs, ODB call barring, the MSISDN, the HPMN HLR and the VPMN VLR. The dynamic CAMEL gateway sends a welcome SMS to the inbound roamer to confirm if the inbound roamer wants to have a local prepaid number using the same or existing SIM card/handset. If the inbound roamer answers yes (via, for example, SMS, VPMN USSD or IVR), the dynamic CAMEL gateway detects whether the inbound roamer record contains the MO-CSI of the inbound roamer. Optionally, the dynamic CAMEL gateway might determine if MO-call barring is in place at the VPMN VLR/VMSC. The dynamic CAMEL gateway issues a MAP ISD command to remove the MO-call barring if the MO-CSI barring is in place at optional step 1006. The dynamic CAMEL gateway provides the MO-CSI to the VPMN VLR of the inbound roamer by sending a stand-alone MAP ISD containing the MO-CSI and IMSI to the VPMN VLR at step 1008 if the inbound roamer record does not contain the MO-CSI. The exact trigger criteria in the MO-CSI may be any international number, the HPMN number, the short-code, any local number, any number or any number with a prefix, etc. or, just no criteria in case of CAMEL phase 1. The filtering is performed at the dynamic CAMEL gateway.

In some embodiments, the dynamic CAMEL gateway can send a VPMN IN trigger profile to the VPMN VLR/VMSC of the inbound roamer. In the following description, a CAP IDP may be IN IDP instead. IN has the advantage of modifying calling number; while CAMEL typically is phase 4 with call segments and InitiateCallAttempt handling to modify calling number. [0075]When the inbound roamer (A) makes a call, the VPMN gsmSSF transfers the call control via a CAP IDP to the dynamic CAMEL gateway or VPMN gsmSCF at step 1010. The dynamic CAMEL gateway performs one or all the following possible actions. However, a person skilled in the art will appreciate that the dynamic CAMEL gateway may be configured to perform other actions.
1. If the called party number (B) is local, the dynamic CAMEL gateway changes the calling number to the corresponding prepaid local number assigned to the inbound roamer (A) and applies prepaid billing locally.
2. If the called party number (B) is not local but with a special prefix A, the dynamic CAMEL gateway changes the calling number to the corresponding prepaid local number assigned to the inbound roamer and applies prepaid billing locally. The prefix A is determined by the VPMN operator and communicated to the inbound roamer (A) via the welcome SMS.
3. If the called party number (B) is not local but has a special prefix B, the dynamic CAMEL gateway keeps the HPMN number but applies prepaid billing locally. The prefix B is determined by the VPMN operator and communicated to the inbound roamer (A) via the welcome SMS.

For prepaid billing, the dynamic CAMEL gateway needs to dynamically arm event triggers on call answers and disconnect (or other circumstances) and process the events as shown in steps 1012 and 1020.

The subscription mechanism is dynamic according to different subscription profiles of an inbound roamer although direct MT-SMS is always used in the welcome SMS of the prepaid local number service. When there are multiple options, the VPMN operator may choose one or many options depending on configurations.

However, if USSD, ## send or customer care is used, the number/s are embedded in the welcome SMS to allow easy call back.

Below are just a few example cases of many possible different inbound roamers profiles
1. Inbound roamers are postpaid roamers: In this case, reply path SMS, MO-SMS, ##send, USSD or customer care calls are allowed. An example of the welcome message is as follows:
   "You are assigned a temp local prepaid number without changing your SIM so you may enjoy receiving calls on your home number and making local rate prepaid calls. To enjoy this service, either reply this message or send a SMS to 23 with ok X where X is in multiples of 50 deducted from your account. U may also call customer care #, send USSD *#23*X# or dial ##23*X to apply for this service. No charge will be made to you for the activation"

   When the inbound roamer replies for service activation, the local number service sends a SMS informing local number and forfeit period etc.
2. Inbound roamers are CAMEL-prepaid and VPMN supports CAMEL inbound roaming: in this case, reply path SMS, MO-SMS, ##send, and customer care are allowed. If USSD is allowed, then USSD may be another option
3. Non-CAMEL inbound roamers: These inbound roamers may register with the VPMN but the outbound calls may be barred. If USSD is allowed, the inbound roamers may make the outbound calls. If SMS is not barred, then reply path SMS, MO-SMS may be used. However, if the USSD is not allowed, then only the MO-SMS is allowed to the dynamic CAMEL gateway.
4. CAMEL inbound roamers, non-CAMEL VPMN and the HPMN allow registration except barring outbound calls. In this scenario, same approach may be used as suggested in point 3.
5. CAMEL inbound roamers, non-CAMEL VPMN, and the HPMN do not allow registration: In this scenario, same approach may be used as suggested in the following point 6.
6. The HPMN does not allow the inbound roamer to roam in the VPMN: The outbound calls and SMS of the inbound roamer are barred. The inbound roamer may be registered at the VPMN without informing the HPMN. In an embodiment, the USSD service may be used. In addition, if the VPMN has no roaming relationship with the HPMN, the authentication of the inbound roamer might be switched off for the inbound roamer of the HPMN.

If the VPMN does not allow USSD, then the MO-SMSs are allowed only to dynamic CAMEL gateway and reply SMS or MO-SMS is the only available option.

To avoid double billing, the dynamic CAMEL gateway may issue CAP FCI to control the CDR formats (with tags) generated at the VPMN VLR/VMSC. In this way, the dynamic CAMEL gateway may filter any locally charged record based on this tag. Thus, the VPMN does not generate MO-TAP and MT-TAP for these accounts.

In accordance with an embodiment of the present invention, the local number may be permanent. In such a scenario, the dynamic CAMEL gateway does not send a welcome SMS to the inbound roamer each time the inbound roamer comes in town although the dynamic CAMEL gateway may send a reminder. To avoid conflicting with the HPMN operator, the prepaid local number service may be limited to a non-O-CSI CAMEL roamer. However, the same solution is applicable to an inbound roamer with O-CSI subscription. Also to avoid conflict with the HPMN operator, the VPMN might also seek permission from the HPMN operator before the launch of the local number service, since PLN provides MO-call services to many of the inbound roamers.

The HPMN operator may increase roaming rerouted call revenue as the prepaid local number service allows an inbound roamer a virtual local prepaid SIM card without changing the HPMN SIM card/handset. However, the HPMN operator would typically lose some local MO-call roaming revenue and possibly even international MO-call revenue. In addition, the HPMN operator might lose MT roaming call revenue on calls to the prepaid local number.

Although this service does not require a new SIM card, it still requires a payment method, either a scratch card or credit card. For a postpaid inbound roamer, this may be pre-deducted with the inbound roamer's consent by generating a MO-TAP record of certain amount (as if a call made by the inbound roamer) to top up the inbound roamer prepaid local account. For a CAMEL-based prepaid inbound roamer, this may also be pre-deducted with the inbound roamer's consent by generating a MO-TAP record of certain amount via a simulation of a MO-CAP call to top up the inbound roamer prepaid local account. In many cases, however, the inbound roamer might need to get scratch cards.

The prepaid local number service also allows an inbound roamer that is barred from making outbound calls (e.g. USSD prepaid roamers) to make the outbound calls using the VPMN prepaid account. In this case, the monitoring block presents the captured ODB and Call Barring SS information to the dynamic CAMEL gateway which may then remove these barring and create an O-CSI using the stand-alone MAP ISD.

The prepaid local number service may even allow an inbound roamer that is barred from roaming (assuming that the VPMN has roaming relationship with the HPMN of the inbound roamer) to enjoy prepaid local service without changing its SIM card. The registration of such a roaming-barred inbound roamer from a HPMN that has roaming relationship with the VPMN is intercepted in this case so that on receiving "roaming not allowed" from the HPMN HLR, the prepaid local number service modifies the message to allow the registration at the VPMN VLR. The inbound roamer who is initially barred from making and receiving calls and SMS uses USSD (or SMS) to request the prepaid local number service. After requesting, the dynamic CAMEL gateway removes the barring on calls and SMS. However, the inbound roamer may not receive calls and SMS from his home number in this case since the HPMN HLR does not allow registration of the inbound roamer at the VPMN.

For the HPMN that has no roaming relationship at all with the VPMN, the VPMN authentication for the inbound roamers of HPMN need to be explicitly turned off first and the signaling messages are intercepted so they don't reach the HPMN. The inbound roamer who is initially barred from making and receiving calls and SMS uses USSD (or SMS) to request the prepaid local number service. After requesting, the dynamic CAMEL gateway removes the barring on calls and SMS. However, the inbound roamer may not receive calls and SMS from his home number in this case since the HPMN HLR does not allow registration of the inbound roamer at the VPMN

Alternatively, each inbound roamer may be provided with a prepaid local number first without explicitly requesting. The call control may be handled by the prepaid local account in that case.

In all the methods, a prepaid local number expires after a configurable period of non-usage. A configurable grace period is provided before the number is sent back to the pool for new inbound roamers.

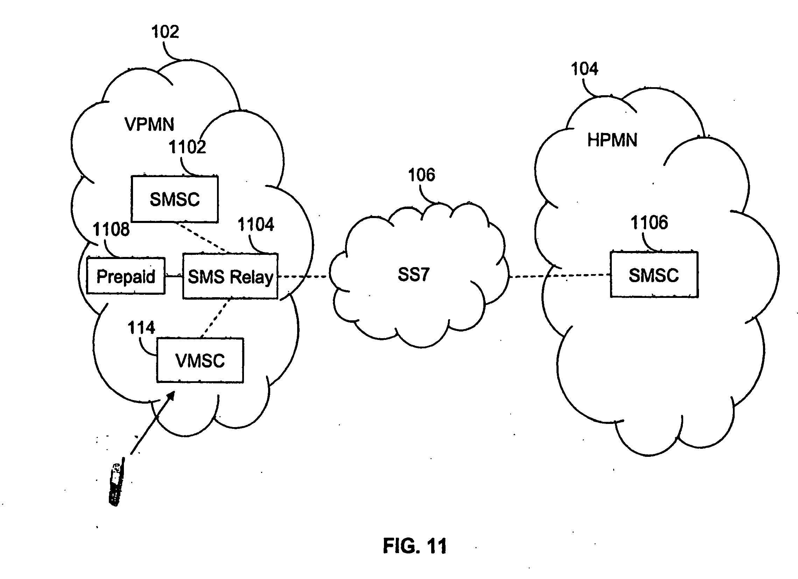

FIG. 11 illustrates a system used for SMS delivery of an inbound roamer in accordance with an embodiment of the present invention. In addition to blocks described in FIG. 1, VPMN 102 includes a SMSC 1102 coupled to a SMS relay 1104. Further, HPMN 104 includes SMSC 1106 that communicates with SMS relay 1104 via SS7 interface 106. To support prepaid local SMS of the inbound roamer for the prepaid local number service, since SMSC 1106 is configured on the inbound roamer's mobile station; monitoring block 108 (not shown) intercepts all SMS sent by the inbound roamer. If the recipient of the SMS is local, the dynamic CAMEL gateway sends the SMS to SMSC 1102 for delivery and deducts the billing against a local prepaid account 1108. Otherwise, the dynamic CAMEL gateway sends the SMS to SMSC 1106.

If VPMN 102 is unable to separate outbound SMS traffic at the international roaming links, monitoring block 108 intercepts all E164 signaling messages at the international roaming links. If the SMSC addresses of the HPMNs of inbound roamers are known, VPMN GMSC/STP 112 may route the SCCP traffic CdPA of these SMSC addresses through the prepaid local number service. In all cases, SSN=8 in the SCCP CdPA may be used to redirect the SCCP traffic through SMS-Relay box 1104.

If VPMN 102 supports CAMEL phase 3, the dynamic CAMEL gateway may provide MO-SMS-CSI at VPMN VLR/VMSC 114. When the VPMN VMSC sends an SMS, the VPMN VMSC gets the trigger from the VPMN VLR and sends the control request to the prepaid local number service to determine the final SMSC and SCCP CdPA destination. If the final SMSC is a local SMSC, CAMEL phase 3 SMS-CSI control deducts billing amount from the local prepaid account 1108.

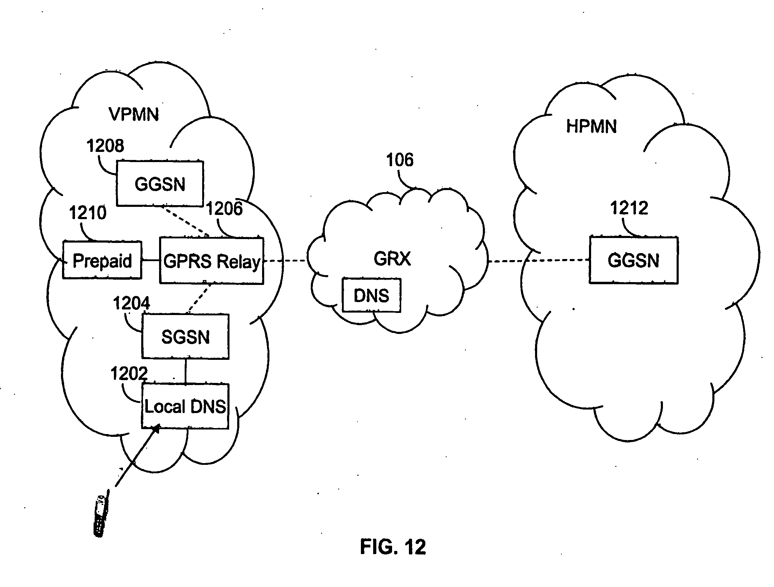

FIG. 12 illustrates a system supporting a prepaid local GPRS service in accordance with an embodiment of the present invention. The VPMN comprises a local DNS 1202, a VPMN SGSN 1204, a GPRS relay 1206, a VPMN GGSN 1208 and prepaid account 1210. To support prepaid local GPRS, monitoring block 108 intercepts all the GPRS traffic from an inbound roamer. Local DNS 1202 for VPMN SGSN 1204 resolves all APN DNS request and points the Prepaid Local Number (PLN) platform to VPMN GGSN 1208. When a tunnel is set up to the PLN, the PLN may have APN, IMSI etc in the set up message. Depending upon whether the APN is HPMN 104 operator specific (e.g. blackberry, intranet etc) or local (e.g. WAP, MMS, Internet etc), the PLN may choose to set up the tunnel to VPMN GGSN 1208 or HPMN GGSN 1212. By default, the tunnel is set to HPMN GGSN 1212. If the APN is not home-operator specific, the PLN may issue an external DINS request on the APN to get HPMN GGSN 1212 so that the tunnel set up message may be relayed to the HPMN GGSN 1212.

If VPMN SGSN 1204 supports CAMEL phase 3, the dynamic CAMEL gateway may insert MO-GPRS CSI to VPMN SGSN 1204. When VPMN SGSN 1204 sends a packet, VPMN SGSN 1204 gets the trigger and sends the control request to the Prepaid Local Number platform to determine whether the final packet should go to the HPMN GGSN 1212 or the local VPMN GGSN 1208. If the tunnel is relayed to the VPMN GGSN 1208, the prepaid charging is done against local prepaid account 1210 via the CAMEL phase 3 GPRS-CSI control.

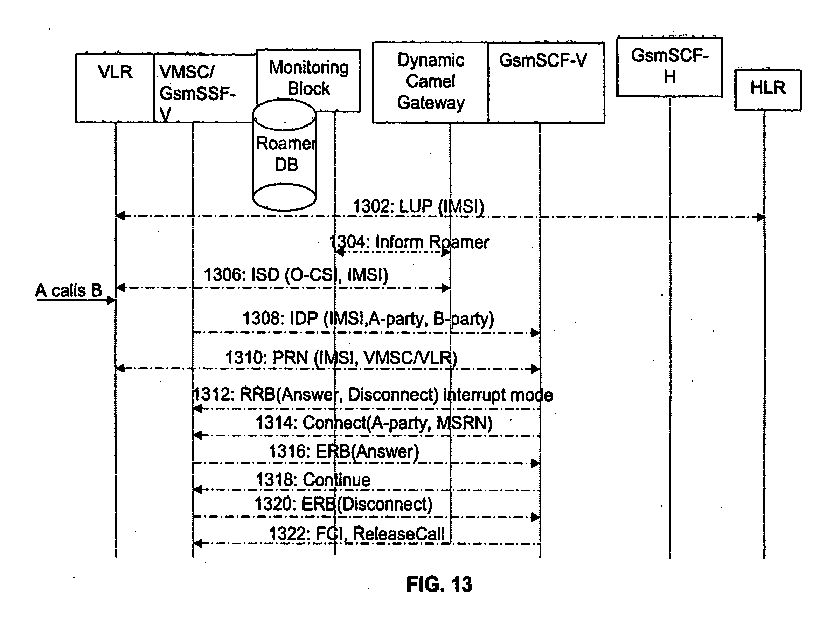

FIG. 13 illustrates a flow diagram of an optimal routing service for an inbound roamer in accordance with an embodiment of the present invention. The optimal routing service allows a call from a local or inbound roamer to another inbound roamer routed through the VPMN network without going through the HPMN network.

At step 1302, the monitoring block detects a successful location update at the CAMEL supporting VPMN of the inbound roamer. The monitoring block provides an inbound roamer record to the dynamic CAMEL gateway at step 1304. The inbound roamer record includes the IMSI of the inbound roamer, the MO-CSI, the MSISDN, the HPMN HLR, the VPMN VLR and the call-barring info etc. The dynamic CAMEL gateway detects that the inbound roamer record does not contain the MO-CSI of the inbound roamer. The dynamic CAMEL gateway provides the MO-CSI to the VPMN VLR of the inbound roamer by sending a stand-alone MAP ISD containing the MO-CSI and IMSI to the VPMN VLR at step 1306.

When the inbound roamer (A) makes a call, the VPMN VMSC/gsmSSF issues CAP IDP containing IMSI, the inbound roamer's number and the called party number to a VPMN gsmSCF at step 1308. The VPMN gsmSCF provides the routing number to the VPMN VLR/VMSC using the roamers database at step 1310. The VPMN gsmSCF requests report basic call state machine from the VPMN gsmSSF at step 1312. At step 1314, the VPMN gsmSCF issues a Connect command to the VPMN gsmSSF containing the mobile station routing number. Once the call is connected, the VPMN gsmSSF issues ERB (answer) command to enable the VPMN gsmSCF to start accounting at step 1316. The VPMN gsmSCF acknowledges the command to start accounting for the call at step 1318. When the call ends, the VPMN gsmSSF issues ERB (Disconnect) command to enable VPMN gsmSCF to stop accounting at step 1320. The VPMN gsmSCF uses a FCI release call to create OR CDR at the VPMN gsmSSF. The dynamic CAMEL gateway may also check whether the inbound roamer is subscribed to the optimal routing service or not.

However, if the inbound roamer is already equipped with the O-CSI, a CAP relay may handle the call via a CAP relay proxy back to the HPMN gsmSCF.

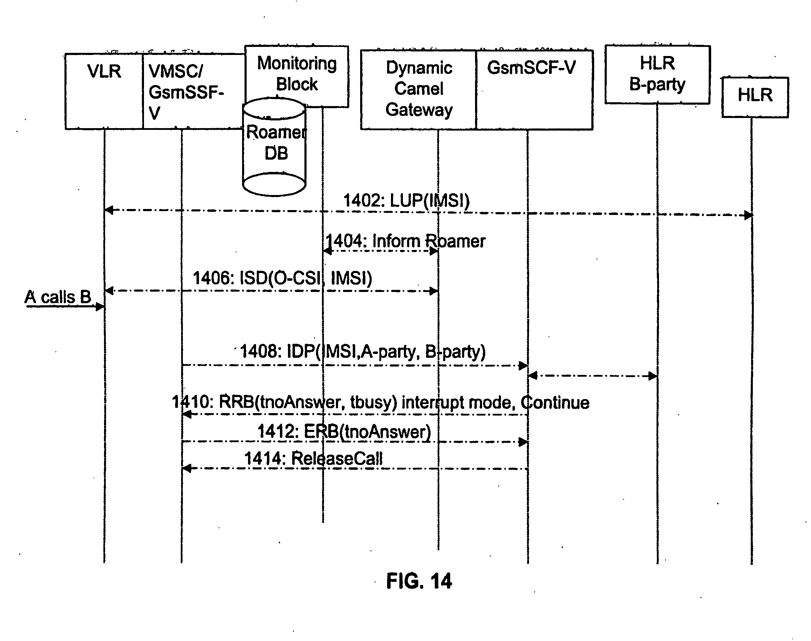

FIG. 14 illustrates a flow diagram of a missed call alert service for an inbound roamer in accordance with an embodiment of the present invention. At step 1402, the monitoring block detects a successful location update at the CAMEL supporting VPMN of the inbound roamer. The monitoring block provides an inbound roamer record to the dynamic CAMEL gateway at step 1404. The inbound roamer record includes the IMSI of the inbound roamer, the MO-CSI, the MSISDN, the HPMN HLR, and the VPMN VLR. The dynamic CAMEL gateway detects that the inbound roamer record does not contain the MO-CSI of the inbound roamer. The dynamic CAMEL gateway provides the MO-CSI to the VPMN VLR of the inbound roamer by sending a stand-alone MAP ISD containing the MO-CSI and IMSI to the VPMN VLR at step 1406. The trigger criteria for the O-CSI may be nothing for CAMEL phase 1, or any local number or any international number in CAMEL phase 2 and plus.

When the inbound roamer (A) makes a call, the dynamic CAMEL gateway or VPMN gsmSCF get the call control at step 1408. The dynamic CAMEL gateway may send the roamer's caller ID to the receiving party via a SMS if the receiving party misses the call, for example, if the receiving party is busy at step 1410. However, it is feasible only if the receiving party is able to receive SMS. The dynamic CAMEL gateway may also track the status of B-party to send the B-party information to the A-party as soon as the B-party is available at steps 1412 and 1414. This is achieved by configuring a SMSC to send MAP report-SMS-delivery-report to the HPMN HLR of the B-party so to obtain MAP AlertSC from the HPMN HLR when the B-party is reachable.

Dynamic O-CSI creation by the Dynamic Camel Gateway at the VPMN VLR to an inbound roamer also allows the VPMN to control MO-calls by inbound roamers of a HPMN for fraud analysis. Parameters possibly of interest to such analysis include without limitation: long duration, frequency and suspect locations..

Under such a fraud analysis embodiment of the present invention, when an inbound roamer makes a call, the call control via CAP IDP is sent to the Dynamic Camel Gateway which can be connected with, or otherwise comprise a Fraud Management System. The Fraud Management System can then reference an answer event and disconnect event from the CAMEL interactions between the switch and the Dynamic Camel Gateway to monitor and interrupt the call if duration is too long or frequency is too many for the same subscriber at the place. The Fraud System can also immediately report suspect usage to HPMN.

A computer usable medium provided herein includes computer usable program code, which when executed generates a Mobile Originating Customized Applications for Mobile network Enhanced Logic (CAMEL) Subscriber Information (MO-CSI) of an inbound roamer. The computer usable medium further includes a computer usable program code for storing at least one inbound roamer record. The inbound roamer record comprises at least the International Mobile Subscriber Identity (IMSI) of the inbound roamer. The computer usable medium further includes computer a usable program code for detecting whether generation of the MO-CSI is required for the inbound roamer. The computer usable medium further includes a computer usable program code for generating the MO-CSI of the inbound roamer based on at least a CAMEL phase supported by a Home Public Mobile Network (HPMN), if the generation of the MO-CSI is required. The computer usable medium as provided herein further includes a computer usable program code for provisioning at least the generated MO-CSI at a Visited Public Mobile Network (VPMN) Visited Location Register (VLR).

The components of Call Control System for Inbound Roamers (CCSIR) described above include any combination of computing components and devices operating together. The components of the CCSIR may also be components or subsystems within a larger computer system or network. The CCSIR components may also be coupled with any number of other components (not shown), for example other buses, controllers, memory devices, and data input/output devices, in any number of combinations. In addition, any number or combination of other processor based components may be carrying out the functions of the CCSIR.

It should be noted that the various components disclosed herein may be described using computer aided design tools and/or expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

The above description of illustrated embodiments of the CCSIR is not intended to be exhaustive or to limit the CCSIR to the precise form disclosed. While specific embodiments of, and examples for, the CCSIR are described herein for illustrative purposes, various equivalent modifications are possible within the scope of the CCSIR, as those skilled in the art will recognize. The teachings of the CCSIR provided herein may be applied to other processing systems and methods. They may not be limited to the systems and methods described above.

The elements and acts of the various embodiments described above may be combined to provide further embodiments. These and other changes may be made to the CCSIR in light of the above detailed description.

### Other Variations

Provided above for the edification of those of ordinary skill in the art, and not as a limitation on the scope of the invention, are detailed illustrations of a scheme for generating and provisioning the CSI of an inbound roamer in a wireless communication network, who has moved onto a VPMN and is detected as being registering with the VPMN. Numerous variations and modifications will occur to those of ordinary skill in the art in view of the embodiments that have now been disclosed. For example, while in the described embodiments, the present invention is implemented primarily from the point of view of GSM mobile networks, the present invention may also be effectively implemented on CDMA, 3G, WCDMA, GPRS, etc., or any other network of common carrier telecommunications in which end users are normally configured to operate within a "home" network to which they normally subscribe, but have the capability of also operating on other neighboring networks.

The examples under the present invention, detailed in the illustrative examples contained here, are described using terms and constructs drawn largely from GSM mobile telephony infrastructure. However, use of these examples should not be interpreted to limiting the invention to those media. The capabilities of the visited or non-accustomed network may be of use and provided through any type of telecommunications medium, including without limitation: (i) any mobile telephony network including, without limitation, GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices; (iii) an entertainment console platform such as Sony Playstation, PSP or other apparatus that are capable of sending and receiving telecommunications over home or non-home networks, or even (iv) fixed-line devices made for receiving communications, but capable of deployment In numerous locations while preserving a persistent subscriber id such as the eye2eye devices from Dink, or telecommunications equipment meant for voice over IP communications such as those provided by Vonage or Packet8.

In describing certain embodiments of dynamic CSI generation under the present invention, this specification follows the path of a telecommunications call from a calling party to a called party. For the avoidance of doubt, that call may be for a normal voice call, in which the subscriber telecommunications equipment is also capable of visual, audiovisual or motion-picture display. Alternatively, those devices or calls may be for text, video, pictures or other communicated data.

### Technical references

GSM 902 on MAP specification .
GSM 340 on SMS
GSM 378 on CAMEL
GSM 978 on CAMEL Application Protocol
GSM 379 on CAMEL Support of Optimal Routing (SOR)
GSM 318 on CAMEL Basic Call Handling
ITU-T Recommendation Q.1214 (1995), Distributed functional plane for intelligent network CS-1.
ITU-T Recommendation Q.1218 (1995), Interface Recommendation for intelligent network CS-1.
ITU-T Recommendation Q.762 (1999), Signaling system No. 7 - ISDN user part general functions of messages and signals.
ITU-T Recommendation Q.763 (1999), Signaling system No. 7 - ISDN user part formats and codes.
ITU-T Recommendation Q.764 (1999), Signaling system No. 7 - ISDN user part signaling procedures.
ITU-T Recommendation Q.766 (1993), Performance objectives in the integrated services digital network applications.
ITU-T Recommendation Q.765 (1998), Signaling system No. 7 - Application transport mechanism.
ITU-T Recommendation Q.769.1 (1999), Signaling system No. 7 - ISDN user part enhancements for the support of Number Portability.

### APPENDIX

| **Acronym** | **Description** |
|---|---|
| BCD | Binary Coded Decimal |
| CAP | CAMEL Application Part |
| CAMEL | Customized Applications for Mobile network Enhanced Logic |
| CB | Call Barring |
| CC | Country Code |
| CLI | Calling Line Identification |
| CON | IN/CAMEL Connect |
| CSI | CAMEL Subscription Information |
| CUE | IN/CAMEI Continue |
| DPC | Destination Point Code |
| ERB | Event Report Basic call state machine |
| FCI | Furnish Charging Information |
| GGSN | Gateway GPRS Support Node |
| GMSC-H | HPMN Gateway MSC |
| GPRS | General Packet Radio Service |
| GPRS-CSI | GPRS CSI |
| gsmSCF | GSM service control function |
| gsmSSF | GSM service switch function |
| HLR | Home Location Register |
| HLR-H | HLR from HPMN |
| HPMN | Home Public Mobile Network |
| IDP | Initial Detection Point IN/CAP message |
| IMSI | International Mobile Subscriber identifier |
| IN | Intelligent Network |
| ISD | Insert Subscriber Data |
| ISUP | ISDN User Part |
| LUP | MAP Location Update |
| MAP | Mobile Application Part |
| ME | Mobile Equipment |
| MNC | Mobile Network Code |
| MSC | Mobile Switch Center |
| MSISDN | Mobile Subscriber ISDN |
| MSRN | Mobile Station Roaming Number |
| NDC | National Destination Code |
| -O-CSI | Originating CSI |
| ODB | Operator Determined Barring |
| PLN | Prepaid Local Number |
| RRB | Request Report Basic call state machine |
| SCCP | Signal Connection Control Part |
| SCP | Service Control Point |
| SGSN | Service GPRS Support Node |
| SPC | Signal Point Code |
| SRI | Send Routing Information |
| SRI-SM | Send Routing Information for Short Message |
| SS7 | Signaling System 7 |
| SS-CSI | Supplementary Service CSI |
| STP | Signal Transfer Point |
| STP-H | HPMN STP |
| T-CSI | Terminating CSI |
| USED | Unstructured Supplementary Service Data |
| VLR | Visited Location Register |
| VLR-V | VLR from VPMN |
| VMSC | Visited Mobile Switch Center |
| VMSC-V | VMSC from VPMN |
| VPMN | Visited Public Mobile Network |
| VT-CSI | Visiting network Terminating CSI |

## Claims

1. A system for generating a Mobile Originating Customized Applications for Mobile network Enhanced Logic, CAMEL, Subscriber Information, MO- CSI, of an inbound roamer, the system comprising:
a roamers' database (204) to store at least one inbound roamer record, wherein the inbound roamer record comprises at least the International Mobile Subscriber Identity, IMSI, of the inbound roamer;
a detection block (202) to detect whether generation of the MO-CSI is required for the inbound roamer;
a MO-CSI generation block (206) to generate the MO-CSI of the inbound roamer based on at least a CAMEL phase supported by a Home Public Mobile Netwonk, HPMN, (104), if the generation of the MO-CSI is required; and
a provisioning block (208) to provision at least the generated MO-CSI at a Visited Public Mobile Network, VPMN, (102) Visited Location Register, VLR, and **characterised in that** the roamer's database is separate from the VLR and that the MO-CSI generation block (206) is in the VPMN (102).

2. The system of claim 1, further comprising a monitoring block to monitor Mobile Application Part, MAP, transaction messages between the VPMN VLR/ Visited Mobile Switch Center, VMSC, (114) and a Home Public Mobile Network, HPMN, Home Location Register, HLR, (118) and store at least the IMSI of the inbound roamer in the roamers database.

3. The system of claim 2, wherein the MAP transaction message comprises a MAP Location Update, LUP.

4. The system of claim 2, wherein the monitoring block is communicatively coupled to the roamers database (204) using a protocol selected from the group consisting of Transmission Control Protocol, TCP, and Internet Protocol, IP.

5. The system of claim 1, further comprising a CAMEL support identification block to identify the phase of CAMEL supported by the HPMN (104).

6. The system of claim 5, wherein the CAMEL support identification logic comprises a CAMEL support database maintaining information of the CAMEL phases supported by at least one HPMN (104).

7. The system of claim 1, wherein the MO-CSI comprises a service key and an address of a Global System for Mobile communication Service Control Function, gsmSCF.

8. The system of claim 1, wherein the inbound roamer record further includes a Mobile Station International Subscriber Directory Number, MSISDN, a HPMN HLR, a VPMN VLR, HPMN supported CAMEL phases and CSIs.

9. The system of claim 1, wherein the detection block (202) is configured to identify whether the MO-CSI of the inbound roamer is defined in the inbound roamer record provided by the monitoring block (108) in response to a successful Location Update, LUP, of the inbound roamer.

10. The system of claim 1, wherein the MO-CSI generation block (206) is configured to generate MO-CSI comprising at least one of a O-CSI, a TDP- Criteria for O-CSI, a Supplementary Service, SS, CSI, and a Translation Information Flag, TIF, CSI, if the HPMN (104) is identified to support one of CAMEL phase 1 and CAMEL phase 2.

11. The system of claim 1, wherein the MO-CSI generation block (206) is configured to generate MO-CSI comprising at least one of a O-CSI, a TDP- Criteria for O-CSI, a Dialled service D-CSI, a SS-CSI, a Visiting network Terminating VT-CSI, a TDP-Criteria for VT-CSI, a Short message Service SMS-CSI, a Mobility management M-CSI, and a TIF-CSI, if the HPMN (104) is identified to support CAMEL phase 3.

12. The system of claim 1, wherein the provisioning block (208) is configured to send a stand-alone Mobile Application Part, MAP, Insert Subscriber Data, ISD, to provision at least the generated MO-CSI of the inbound roamer to the VPMN VLR (114).

13. The system of claim 12, wherein the MAP ISD is issued using the IMSI of the inbound roamer.

14. The system of claim 1, further comprising a service node (402) for implementing call control services for the inbound roamer.

15. The system of claim 14, wherein the service node (402) is a gsmSCF.

16. The system of claim 14, wherein the service node (402) provides call control services for at least one of a short code dialing service, a misdialed digits correction service, a Calling Line Identification, CLI, guarantee, a pre-paid local number service, a missed call alert service, and an optimal routing service for the inbound roamer.

17. The system of claim 14, wherein the system is coupled to at least one VMSC (114) of the VPMN (102), wherein the VPMN VMSC is configured to transfer a call control from the inbound roamer to the service node.

18. The system of claim 17, wherein a global system for mobile communication service switching function, gsmSSF, is integrated with the VPMN VMSC (114).

19. The system of claim 1 wherein the detection block (202) is arranged to detect whether a VPMN Intelligent Network, IN, trigger profile generation block is required for the inbound roamer.

20. The system of claim 19, wherein the detection block (202) is configured to identify whether the VPMN Intelligent Network, IN, trigger profile of the inbound roamer is defined in the inbound roamer record provided by the monitoring block (108) in response to a successful Location Update, LUP, of the inbound roamer.

21. The system of claim 19, wherein the provisioning block (208) is configured to send a stand-alone Mobile Application Part, MAP, Insert Subscriber Data, ISD, to provision at least the VPMN Intelligent NetworK, IN, trigger profile of the inbound roamer to the VPMN VLR.

22. A method of generating a Mobile Originating Customized Applications for Mobile network Enhanced Logic, CAMEL, Subscriber Information, MO- CSI, of an inbound roamer, the method comprising:
storing at least one inbound roamer record in a roamers' database (204), wherein the inbound roamer record comprises at least the International Mobile Subscriber Identity, IMSI, of the inbound roamer;
detecting whether generation of the MO-CSI is required for the inbound roamer;
generating the MO-CSI of the inbound roamer based on at least a CAMEL phase supported by a Home Public Mobile Network, HPMN, (104), if the generation of the MO-CSI is required; and
provisioning at least the generated MO-CSI at a Visited Public Mobile Network, VPMN, (102) Visited Location Register, VLR, (114), and wherein the roamers' database (204) is separate from the VLR and the step of generating the MO-CSI takes place in the VPMN (102).

23. The method of claim 22, further comprising monitoring Mobile Application Part, MAP, transaction messages between the VPMN VLR/ Visited Mobile Switch Center, VMSC, (114) and a Home Public Mobile Network, HPMN, Home Location Register, HLR, (118) and storing at least the IMSI of the inbound roamer in the roamers database.

24. The method of claim 23, wherein the MAP transaction message comprises a MAP Location Update, LUP.

25. The method of claim 22, wherein the MO-CSI comprises a service key and an address of a Global System for Mobile communication, GSM, Service Control Function, SCF.

26. The method of claim 22, further comprising identifying the phase of CAMEL supported by the HPMN (104).

27. The method of claim 22, further comprising maintaining information of the CAMEL phases supported by at least one HPMN (104).

28. The method of claim 22, wherein the inbound roamer record further includes a Mobile Station International Subscriber Directory Number, MSISDN, a HPMN HLR (118), a VPMN VLR (114), HPMN supported CAMEL phases and CSIs.

29. The method of claim 22, wherein detecting comprises identifying whether the MO-CSI of the inbound roamer is defined in the inbound roamer record in response to a successful Location Update, LUP, of the inbound roamer.

30. The method of claim 22, wherein the MO-CSI comprises at least one of 0-CSI, TDP-Criteria for O-CSI, Supplementary Service SS-CSI, and Translation Information Flag TIF-CSI, if the HPMN (104) is identified to support one of CAMEL phase 1 and CAMEL phase 2.

31. The method of claim 22, wherein the MO-CSI comprises at least one of O-CSI, TDP-Criteria for O-CSI, Dialled service D-CSI, SS-CSI, Visiting network Terminating VT-CSI, TDP-Criteria for VT-CSI, Short message Service SMS-CSI, Mobility management M-CSI, General Packet Radio Service GPRS-CSI₁ TDP Criteria for GPRS-CSI, and TIF-CSI, if the HPMN (104) is identified to support CAMEL phase 3.

32. The method of claim 22, wherein provisioning comprises sending a stand-alone Mobile Application Part, MAP, Insert Subscriber Data, ISD, to provision at least the generated MO-CSI of the inbound roamer to the VPMN VLR (114).

33. The method of claim 32, wherein issuing the MAP ISD is done using the IMSI of the inbound roamer.

34. The method of claim 22, further comprising implementing the call control services for the inbound roamer.

35. The method of claim 34, wherein transferring the call control is done via a CAMEL Application Part, CAP, Initiation Detection Point, IDP.

36. The method of claim 22, further comprises issuing a long number translation when the called number by the inbound roamer is a short-code, wherein the issuing is performed by a service node.

37. The method of claim 34, further comprises issuing a corrected number translation when the called number by the inbound roamer is an invalid number, wherein the issuing is performed by a service node (402).

38. The method of claim 22, further comprises modifying the call control capability of the inbound roamer for a pre-paid local number service.

39. The method of claim 22, further comprises issuing a prepaid local number to the inbound roamer when the call control of the inbound roamer is passed to a service node (402).

40. The method of claim 22, further comprises determining whether a local prepaid account of the inbound roamer is to be debited for the call or not.

41. The method of claim 22, further comprises determining whether one of a HPMN number and the pre-paid local number is to be displayed as a caller ID to a receiving party.

42. The method of claim 22, further comprises issuing a Mobile Subscriber Roaming Number, MSRN, to the VPMN VMSC (114) for optimally routing the call from the inbound roamer, wherein the issuing is performed by a service node.

43. The method of claim 22, further comprises issuing a routing number to the VPMN VMSC (114) for a calling line identification guarantee, CLI, of the inbound roamer, wherein the issuing is performed by a service node (402).

44. The method of claim 22, further comprises providing a missed call alert to a receiving party, wherein the providing the missed call alert is performed by a service node (402).

45. The method of claim 22, further comprises configuring at least one VPMN VMSC (114) to transfer the call control of the inbound roamer to the service node (402) for fraud management.

46. The method of claim 22, wherein detecting whether generation of the MO-CSI is required comprises detecting whether generation of the VPMN Intelligent Network (IN) trigger profile is required for the inbound roamer;
and wherein the method further comprises:
generating the VPMN Intelligent Network, IN, trigger profile of the inbound roamer if required.

47. The method of claim 46, wherein provisioning comprises sending a stand-alone Mobile Application Part, MAP, Insert Subscriber Data, ISD, to provision at least the VPMN Intelligent Network, IN, trigger profile of the inbound roamer to the VPMN VLR (114).

48. A computer program product comprising a computer useable medium including a computer usable program code for performing all the steps of any of claims 22, 23, 26, 27, 29-32, 34 and 36-44.

49. The computer program product of claim 48 when dependent on claim 22, further comprising a computer usable program code for configuring at least one switching center of the VPMN (102) to transfer a call control of the inbound roamer to a service node (402).

## Patentansprüche

1. System zum Erzeugen von von einem mobilen Endgerät ausgehenden kundenorientierten Anwendungen für Teilnehmerinformationen, MO-CSI, mit verbesserter Mobilnetzlogik, CAMEL, eines ankommenden Gastteilnehmers, wobei das System enthält:
eine Gastteilnehmer-Datenbank (204), um wenigstens einen Datensatz eines ankommenden Gastteilnehmers zu speichern, wobei der Datensatz des ankommenden Gastteilnehmers wenigstens die internationale Mobilteilnehmeridentität, IMSI, des ankommenden Gastteilnehmers enthält;
einen Detektionsblock (202), um zu detektieren, ob die Erzeugung der MO-CSI für den ankommenden Gastteilnehmer erforderlich ist;
einen MO-CSI-Erzeugungsblock (206), um die MO-CSI des ankommenden Gastteilnehmers auf der Grundlage wenigstens einer CAMEL-Phase zu erzeugen, die durch ein öffentliches Heim-Mobilnetz, HPMN, (104) unterstützt wird, falls die Erzeugung der MO-CSI erforderlich ist; und
einen Bereitstellungsblock (208), um wenigstens die erzeugten MO-CSI bei einem Register für den besuchten Ort, VLR, eines besuchten öffentlichen Mobilnetzes, VPMN, (102) bereitzustellen, und **dadurch gekennzeichnet, dass** die Gastteilnehmer-Datenbank von dem VLR getrennt ist und dass der MO-CSI-Erzeugungsblock (206) in der VPMN (102) vorhanden ist.

2. System nach Anspruch 1, ferner mit einem Überwachungsblock, um Mobilanwendungsteil-Transaktionsnachrichten, MAP-Transaktionsnachrichten, zwischen dem VPMN VLR/der besuchten Mobilvermittlungszentrale, VMSC, (114) und einem Register des Heimatortes, HLR, (118) des öffentlichen Heimmobilnetzes, HPMN, zu überwachen und um wenigstens die IMSI des ankommenden Gastteilnehmers in der Gastteilnehmer-Datenbank zu speichern.

3. System nach Anspruch 2, wobei die MAP-Transaktionsnachricht eine MAP-Ortsaktualisierung, LUP, enthält.

4. System nach Anspruch 2, wobei der Überwachungsblock mit der Gastteilnehmer-Datenbank (204) kommunikationstechnisch gekoppelt ist, wobei ein Protokoll verwendet wird, das aus der Gruppe ausgewählt ist, die aus dem Übertragungssteuerprotokoll, TCP, und dem Internetprotokoll IP, besteht.

5. System nach Anspruch 1, das ferner einen CAMEL-Unterstützungsidentifizierungsblock enthält, um die Phase der CAMEL, die durch das HPMN (104) unterstützt wird, zu identifizieren.

6. System nach Anspruch 5, wobei die CAMEL-Unterstützungsidentifizierungslogik eine CAMEL-Unterstützungsdatenbank enthält, die Informationen der CAMEL-Phasen aufrechterhält, die durch wenigstens ein HPMN (104) unterstützt werden.

7. System nach Anspruch 1, wobei die MO-CSI einen Dienstschlüssel und eine Adresse eines globalen Systems für eine Mobilkommunikations-Dienststeuerfunktion, gsmSCF, enthält.

8. System nach Anspruch 1, wobei die Datensatz des ankommenden Gastteilnehmers ferner eine internationale Mobilstations-Teilnehmerrufnummer, MSISDN, ein HPMN HLR, ein VPMN VLR, durch HPMN unterstützte CAMEL-Phasen und CSIs enthält.

9. System nach Anspruch 1, wobei der Detektionsblock (202) konfiguriert ist, um zu identifizieren, ob die MO-CSI des ankommenden Gastteilnehmers in dem Datensatz des ankommenden Gastteilnehmers definiert ist, die durch den Überwachungsblock (108) in Reaktion auf eine erfolgreiche Ortsaktualisierung, LUP, des ankommenden Gastteilnehmers bereitgestellt wird.

10. System nach Anspruch 1, wobei der MO-CSI-Erzeugungsblock (206) konfiguriert ist, um MO-CSI zu erzeugen, die O-CSI und/oder TDP-Kriterien für O-CSI und/oder Zusatzdienst-CSI, SS-CSI, und/oder Translationsinformations-Flag-CSI, TIF-CSI, enthält, falls für das HPMN (104) festgestellt wird, dass es entweder eine CAMEL-Phase 1 oder eine CAMEL-Phase 2 unterstützt.

11. System nach Anspruch 1, wobei der MO-CSI-Erzeugungsblock (206) konfiguriert ist, um MO-CSI zu erzeugen, die O-CSI und/oder TDP-Kriterien für die O-CSI und/oder Wähldienst-CSI, D-CSI, und/oder SS-CSI, CSI für den Abschluss des besuchenden Netzes, VT-CSI, und/oder TDP-Kriterien für die VT-CSI und/oder Kurznachrichtendienst-CSI, SMS-CSI, und/oder Mobilitätsmanagement-CSI, M-CSI, und/oder TIF-CSI enthält, falls für das HPMN (104) festgestellt wird, dass es eine CAMEL-Phase 3 unterstützt.

12. System nach Anspruch 1, wobei der Bereitstellungsblock (208) konfiguriert ist, um selbstständige Mobilanwendungsteil-Einfügungsteilnehmerdaten, MAP-ISD, zu senden, um wenigstens erzeugte MO-CSI des ankommenden Gastteilnehmers für das VPMN VLR (114) bereitzustellen.

13. System nach Anspruch 12, wobei die MAP ISD unter Verwendung der IMSI des ankommenden Gastteilnehmers ausgegeben werden.

14. System nach Anspruch 1, das ferner einen Dienstknoten (402) enthält, um Anrufsteuerdienste für den ankommenden Gastteilnehmer zu implementieren.

15. System nach Anspruch 14, wobei der Dienstknoten (402) eine gsmSCF ist.

16. System nach Anspruch 14, wobei der Dienstknoten (402) Anrufsteuerdienste für einen Kurzcode-Wähldienst und/oder einen Dienst für die Korrektur falsch gewählter Ziffern und/oder eine Anrufleitungsidentifizierungsgarantie, CLI-Garantie, und/oder einen Dienst für vorausbezahlte lokale Nummern und/oder einen Dienst für die Warnung vor falschen Anrufen und/oder einen Dienst zur optimalen Lenkung für den ankommenden Gastteilnehmer bereitstellt.

17. System nach Anspruch 14, wobei das System mit wenigstens einer VMSC (114) des VPMN (102) gekoppelt ist, wobei die VPMN VMSC konfiguriert ist, um eine Anrufsteuerung von dem ankommenden Gastteilnehmer an den Dienstknoten zu übertragen.

18. System nach Anspruch 17, wobei ein globales System für eine Mobilkommunikations-Dienstvermittlungsfunktion, gsmSSF, in die VPMN VMSC (114) integriert ist.

19. System nach Anspruch 1, wobei der Detektionsblock (202) dazu ausgelegt ist, zu detektieren, ob ein Block für die Erzeugung eines Auslöseprofils für ein intelligentes VPMN-Netz, IN-Auslöseprofil, für den ankommenden Gastteilnehmer erforderlich ist.

20. System nach Anspruch 19, wobei der Detektionsblock (202) konfiguriert ist, um festzustellen, ob ein Auslöseprofil für das intelligente VPMN-Netz, IN-Auslöseprofil, des ankommenden Gastteilnehmers in dem Datensatz des ankommenden Gastteilnehmers definiert ist, der durch den Überwachungsblock (108) in Reaktion auf eine erfolgreiche Ortsaktualisierung, LUP, des ankommenden Gastteilnehmers bereitgestellt wird.

21. System nach Anspruch 19, wobei der Bereitstellungsblock (208) konfiguriert ist, um selbstständige Mobilanwendungsteil-Einfügungsteilnehmerdaten, MAP ISD, zu senden, um wenigstens das Auslöseprofil für intelligentes VPMN-Netz, IN-Auslöseprofil, des ankommenden Gastteilnehmers für das VPMN VLR bereitzustellen.

22. Verfahren zum Erzeugen von von einem mobilen Endgerät ausgehenden kundenorientierten Anwendungen für Teilnehmerinformationen, MO-CSI, mit verbesserter Mobilnetzlogik, CAMEL, eines ankommenden Gastteilnehmers, wobei das Verfahren enthält:
Speichern wenigstens eines Datensatzes eines ankommenden Gastteilnehmers in einer Gastteilnehmer-Datenbank (204), wobei der Datensatz des ankommenden Gastteilnehmers wenigstens die internationale mobile Teilnehmeridentität, IMSI, des ankommenden Gastteilnehmers enthält;
Detektieren, ob die Erzeugung der MO-CSI für den ankommenden Gastteilnehmer erforderlich sind;
Erzeugen der MO-CSI des ankommenden Gastteilnehmers auf der Grundlage wenigstens einer CAMEL-Phase, die durch ein öffentliches Heim-Mobilnetz, HPMN, (104) unterstützt wird, falls die Erzeugung der MO-CSI erforderlich ist; und
Bereitstellen wenigstens der erzeugten MO-CSI bei einem besuchten Ortsregister, VLR, (114) eines besuchten öffentlichen Mobilnetzes, VPMN, (102), wobei die Gastteilnehmer-Datenbank (204) von dem VLR getrennt ist und wobei der Schritt des Erzeugens der MO-CSI in dem VPMN (102) stattfindet.

23. Verfahren nach Anspruch 22, das ferner das Überwachen von Mobilanwendungsteil-Transaktionsnachrichten, MAP-Nachrichten, zwischen dem VPMN VLR/der besuchten Mobilvermittlungszentrale, VMSC, (114) und einem Heimatortsregister, HLR, (118) eines öffentlichen Heim-Mobilnetzes, HPMN, und das Speichern wenigstens der IMSI des ankommenden Gastteilnehmers in der Gastteilnehmer-Datenbank enthält.

24. Verfahren nach Anspruch 23, wobei die MAP-Transaktionsnachricht eine MAP-Ortsaktualisierung, LUP, enthält.

25. Verfahren nach Anspruch 22, wobei die MO-CSI einen Dienstschlüssel und eine Adresse eines globalen Systems für eine Mobilkommunikations-Dienststeuerfunktion, GSM SCF, enthält.

26. Verfahren nach Anspruch 22, das ferner das Identifizieren der Phase der CAMEL, die durch das HPMN (104) unterstützt wird, enthält.

27. Verfahren nach Anspruch 22, das ferner das Aufrechterhalten von Informationen der CAMEL-Phasen, die durch wenigstens ein HPMN (104) unterstützt wird, enthält.

28. Verfahren nach Anspruch 22, wobei der Datensatz des ankommenden Gastteilnehmers ferner eine internationale Mobilstationsteilnehmerrufnummer, MSISDN, ein HPMN HLR (118), ein VPMN VLR (114), durch HPMN unterstützte CAMEL-Phasen und CSI enthält.

29. Verfahren nach Anspruch 22, wobei das Detektieren das Identifizieren, ob die MO-CSI des ankommenden Gastteilnehmers in dem Datensatz des ankommenden Gastteilnehmers definiert sind, in Reaktion auf eine erfolgreiche Ortsaktualisierung, LUP, des ankommenden Gastteilnehmers enthält.

30. Verfahren nach Anspruch 22, wobei die MO-CSI O-CSI und/oder TDP-Kriterien für die O-CSI, und/oder Zusatzdienst-CSI, SS-CSI, und/oder Translationsinformations-Flag-CSI, TIF-CSI, enthält, falls für das HPMN (104) festgestellt wird, dass es entweder eine CAMEL-Phase 1 oder eine CAMEL-Phase 2 unterstützt.

31. Verfahren nach Anspruch 22, wobei die MO-CSI O-CSI und/oder TDP-Kriterien für O-CSI und/oder Wähldienst-CSI, D-CSI, und/oder SS-CSI, und/oder CSI für den Abschluss eines besuchenden Netzes, VT-CSI, und/oder TDP-Kriterien für VT-CSI, Kurznachrichtendienst-CSI, SMS-CSI, und/oder Mobilitätsmanagement-CSI, M-CSI, und/oder CSI für allgemeinen Paketrundsendedienst, GPRS-CSI, und/oder TDP-Kriterien für GPRS-CSI und/oder TIF-CSI enthält, falls für das HPMN (104) identifiziert wird, dass es eine CAMEL-Phase 3 unterstützt.

32. Verfahren nach Anspruch 22, wobei das Bereitstellen das Senden von selbstständigen Mobilanwendungsteil-Einfügungsteilnehmerdaten, MAP ISD, enthält, um wenigstens die erzeugten MO-CSI des ankommenden Gastteilnehmers für das VPMN VLR (114) bereitzustellen.

33. Verfahren nach Anspruch 32, wobei das Ausgeben der MAP ISD unter Verwendung der IMSI des ankommenden Gastteilnehmers erfolgt.

34. Verfahren nach Anspruch 22, das ferner das Implementieren der Anrufsteuerdienste für den ankommenden Gastteilnehmer enthält.

35. Verfahren nach Anspruch 34, wobei das Übertragen der Anrufsteuerung über einen CAMEL-Anwendungsteil-Initiierungsdetektionspunkt, CAP-IDP, erfolgt.

36. Verfahren nach Anspruch 22, das ferner das Ausgeben einer Langnummer-Translation enthält, wenn die durch den ankommenden Gastteilnehmer angerufene Nummer ein Kurzcode ist, wobei die Ausgabe durch einen Dienstknoten ausgeführt wird.

37. Verfahren nach Anspruch 34, das ferner das Ausgeben einer Translation einer korrigierten Nummer enthält, wenn die durch den ankommenden Gastteilnehmer angerufene Nummer eine ungültige Nummer ist, wobei die Ausgabe durch einen Dienstknoten (402) ausgeführt wird.

38. Verfahren nach Anspruch 22, das ferner das Modifizieren der Anrufsteuerungsfähigkeit des ankommenden Gastteilnehmers für einen im Voraus bezahlten lokalen Nummerndienst enthält.

39. Verfahren nach Anspruch 22, das ferner das Ausgeben einer im Voraus bezahlten lokalen Nummer an den ankommenden Gastteilnehmer enthält, wenn die Anrufsteuerung des ankommenden Gastteilnehmers zu dem Dienstknoten (402) geleitet wird.

40. Verfahren nach Anspruch 22, das ferner das Bestimmen, ob ein lokales im Voraus bezahltes Konto des ankommenden Gastteilnehmers für den Anruf belastet wird oder nicht.

41. Verfahren nach Anspruch 22, das ferner das Bestimmen, ob eine HPMN-Nummer und die im Voraus bezahlte lokale Nummer als eine Anrufer-ID bei einem empfangenden Teilnehmer angezeigt werden soll, enthält.

42. Verfahren nach Anspruch 22, das ferner das Ausgeben einer Mobilteilnehmer-Gastteilnehmernummer, MSRN, an die VPMN VMSC (114) enthält, um den Anruf von dem ankommenden Gastteilnehmer optimal zu lenken, wenn die Ausgabe durch den Dienstknoten ausgeführt wird.

43. Verfahren nach Anspruch 22, das ferner das Ausgeben einer Lenkungsnummer an die VPMN VMSC (114) für eine Anrufleitungs-Identifizierungsgarantie, CLI, des ankommenden Gastteilnehmers enthält, wenn die Ausgabe durch einen Dienstknoten (402) ausgeführt wird.

44. Verfahren nach Anspruch 22, das ferner das Bereitstellen einer Warnung vor falschen Anrufen für einen empfangenden Teilnehmer enthält, wobei das Bereitstellen der Warnung vor falschen Anrufen durch einen Dienstknoten (402) ausgeführt wird.

45. Verfahren nach Anspruch 22, das ferner das Konfigurieren wenigstens einer VPMN VMSC (114) enthält, um die Anrufsteuerung des ankommenden Gastteilnehmers an den Dienstknoten (402) für ein Betrugs-Management zu übertragen.

46. Verfahren nach Anspruch 22, wobei das Detektieren, ob die Erzeugung der MO-CSI erforderlich ist, das Detektieren, ob die Erzeugung des Auslöseprofils für das intelligente VPMN-Netz (IN-Auslöseprofil) für den ankommenden Gastteilnehmer erforderlich ist, enthält;
und wobei das Verfahren ferner enthält:
Erzeugen des Auslöseprofils für das intelligente VPMN-Netz, IN-Auslöseprofil, das ankommenden Gastteilnehmers, falls es erforderlich ist.

47. Verfahren nach Anspruch 46, wobei das Bereitstellen das Senden von selbstständigen Mobilanwendungsteil-Einfügungsteilnehmerdaten, MAP ISD, enthält, um wenigstens das Auslöseprofil des intelligenten VPMN-Netzes, IN-Auslöseprofil, des ankommenden Gastteilnehmers für das VPMN VLR (114) bereitzustellen.

48. Computerprogrammprodukt, das ein von einem Computer nutzbares Medium enthält, das einen von einem Computer nutzbaren Programmcode enthält, um alle Schritte nach einem der Ansprüche 22, 23, 26, 27, 29-32, 34 und 36-44 auszuführen.

49. Computerprogrammprodukt nach Anspruch 48, wenn abhängig von Anspruch 22, das ferner einen von einem Computer nutzbaren Programmcode enthält, um wenigstens eine Vermittlungszentrale des VPMN (102) zu konfigurieren, um eine Anrufsteuerung des ankommenden Gastteilnehmers an einen Dienstknoten (402) zu übertragen.

## Revendications

1. Système destiné à générer une Information d'abonné d'origine mobile, MO-CSI, relative à des Applications personnalisées pour logique améliorée de réseau mobile, CAMEL, concernant un abonné itinérant entrant, le système comportant :
une base de données (204) d'abonnés itinérants servant à stocker au moins un enregistrement d'abonné itinérant entrant, l'enregistrement d'abonné itinérant entrant comportant au moins l'Identité internationale d'abonné mobile, IMSI, de l'abonné itinérant entrant ;
un bloc (202) de détection servant à détecter si la génération de la MO-CSI est requise pour l'abonné itinérant entrant ;
un bloc (206) de génération de MO-CSI servant à générer la MO-CSI de l'abonné itinérant entrant en se basant sur au moins une phase de CAMEL prise en charge par un Réseau mobile public de rattachement, HPMN (104), si la génération de la MO-CSI est requise ; et
un bloc (208) de fourniture servant à fournir au moins la MO-CSI générée au niveau du Registre de position visité, VLR, d'un réseau mobile public visité, VPMN, et **caractérisé en ce que** la base de données d'abonnés itinérants est distincte du VLR et **en ce que** le bloc (206) de génération de MO-CSI se situe dans le VPMN (102).

2. Système selon la revendication 1, comportant en outre un bloc de surveillance servant à surveiller des messages de transaction de Sous-système d'application mobile, MAP, entre le VLR / le Centre de commutation pour mobiles visité, VMSC (114) du VPMN et un Registre de position de rattachement, HLR (118) de Réseau mobile public de rattachement, HPMN, et à stocker au moins l'IMSI de l'abonné itinérant entrant dans la base de données d'abonnés itinérants.

3. Système selon la revendication 2, le message de transaction MAP comportant une Mise à jour de position, LUP, de MAP.

4. Système selon la revendication 2, le bloc de surveillance étant couplé en vue de communiquer avec la base de données (204) d'abonnés itinérants à l'aide d'un protocole choisi dans le groupe constitué du Protocole de commande de transmission, TCP, et du Protocole Internet, IP.

5. Système selon la revendication 1, comportant en outre un bloc d'identification de prise en charge CAMEL servant à identifier la phase de CAMEL prise en charge par le HPMN (104).

6. Système selon la revendication 5, la logique d'identification de prise en charge CAMEL comportant une base de données de prise en charge CAMEL maintenant des informations sur les phases de CAMEL prises en charge par au moins un HPMN (104).

7. Système selon la revendication 1, la MO-CSI comportant une clé de service et une adresse d'une Fonction de commande de service pour Système mondial de communications mobiles, gsmSCF.

8. Système selon la revendication 1, l'enregistrement d'abonné itinérant entrant comprenant en outre un Numéro d'annuaire international d'abonné de station mobile, MSISDN, un HLR de HPMN, un VLR de VPMN, des phases de CAMEL prises en charge par au moins un HPMN et des CSI.

9. Système selon la revendication 1, le bloc (202) de détection étant configuré pour déterminer si la MO-CSI de l'abonné itinérant entrant est défini dans l'enregistrement d'abonné itinérant entrant communiqué par le bloc (108) de surveillance en réaction à une Mise à jour de position, LUP, réussie de l'abonné itinérant entrant.

10. Système selon la revendication 1, le bloc (206) de génération de MO-CSI étant configuré pour générer une MO-CSI comportant au moins un élément parmi une O-CSI, des critères de TDP pour O-CSI, une CSI de service supplémentaire, SS, et une CSI de Fanion d'information de traduction, TIF, s'il est déterminé que le HPMN (104) prend en charge la phase 1 de CAMEL ou la phase 2 de CAMEL.

11. Système selon la revendication 1, le bloc (206) de génération de MO-CSI étant configuré pour générer une MO-CSI comportant au moins un élément parmi une O-CSI, des critères de TDP pour O-CSI, une D-CSI de Service à numéroter, une SS-CSI, une CSI de Terminaison de réseau visité, VT, des critères de TDP pour VT-CSI, une SMS-CSI de Service de messages courts, une M-CSI de gestion de mobilité et une TIF-CSI, s'il est déterminé que le HPMN (104) prend en charge la phase 3 de CAMEL.

12. Système selon la revendication 1, le bloc (208) de fourniture étant configuré pour envoyer de manière autonome des Données d'insertion d'abonné, ISD, de Sous-système d'application mobile, MAP, afin de fournir au moins la MO-CSI générée de l'abonné itinérant entrant au VLR (114) de VPMN.

13. Système selon la revendication 12, les ISD de MAP étant émises en utilisant l'IMSI de l'abonné itinérant entrant.

14. Système selon la revendication 1, comportant en outre un noeud (402) de service destiné à mettre en oeuvre des services de commande d'appel pour l'abonné itinérant entrant.

15. Système selon la revendication 14, le noeud (402) de service étant une gsmSCF.

16. Système selon la revendication 14, le noeud (402) de service assurant des services de commande d'appel pour un service à numérotation abrégée, a service de correction de numéros erronés, une garantie d'Identification de la ligne appelante, CLI, un service à numéros locaux prépayés, un service d'alerte d'appels manqués et / ou un service de routage optimal pour l'abonné itinérant entrant.

17. Système selon la revendication 14, le système étant couplé à au moins un VMSC (114) du VPMN (102), le VMSC du VPMN étant configuré pour transférer une commande d'appel de l'abonné itinérant entrant au noeud de service.

18. Système selon la revendication 17, une fonction de commutation de service pour Système mondial de communications mobiles, gsmSSF, étant intégrée au VMSC (114) du VPMN.

19. Système selon la revendication 1, le bloc (202) de détection étant agencé en vue de déterminer si un bloc de génération de profil de déclenchement du VPMN de Réseau intelligent, IN, est requis pour l'abonné itinérant entrant.

20. Système selon la revendication 19, le bloc (202) de détection étant configuré pour déterminer si le profil de déclenchement du VPMN de Réseau intelligent, IN, de l'abonné itinérant entrant est défini dans l'enregistrement d'abonné itinérant entrant communiqué par le bloc (108) de surveillance en réaction à une Mise à jour de position, LUP, réussie de l'abonné itinérant entrant.

21. Système selon la revendication 19, le bloc (208) de fourniture étant configuré pour envoyer de manière autonome des Données d'insertion d'abonné, ISD, de Sous-système d'application mobile, MAP, afin de fournir au moins le profil de déclenchement du VPMN de Réseau intelligent, IN, de l'abonné itinérant entrant au VLR de VPMN.

22. Procédé de génération d'une information d'abonné d'origine mobile, MO-CSI, relative à des applications personnalisées pour logique améliorée de réseau mobile, CAMEL, concernant un abonné itinérant entrant, le procédé comportant les étapes consistant à :
stocker au moins un enregistrement d'abonné itinérant entrant dans une base de données (204) d'abonnés itinérants, l'enregistrement d'abonné itinérant entrant comportant au moins l'Identité internationale d'abonné mobile, IMSI, de l'abonné itinérant entrant ;
détecter si la génération de la MO-CSI est requise pour l'abonné itinérant entrant ;
générer la MO-CSI de l'abonné itinérant entrant en se basant sur au moins une phase de CAMEL prise en charge par un Réseau mobile public de rattachement, HPMN (104), si la génération de la MO-CSI est requise ; et fournir au moins la MO-CSI générée au niveau du Registre de position visité, VLR (114), d'un réseau mobile public visité, VPMN (102), la base de données (204) d'abonnés itinérants étant distincte du VLR et l'étape de génération de la MO-CSI ayant lieu dans le VPMN (102).

23. Procédé selon la revendication 22, comportant en outre une étape consistant à surveiller des messages de transaction de Sous-système d'application mobile, MAP, entre le VLR / le Centre de commutation pour mobiles visité, VMSC (114) du VPMN et un Registre de position de rattachement, HLR (116) de Réseau mobile public de rattachement, HPMN, et à stocker au moins l'IMSI de l'abonné itinérant entrant dans la base de données d'abonnés itinérants.

24. Procédé selon la revendication 23, le message de transaction MAP comportant une Mise à jour de position, LUP, de MAP.

25. Procédé selon la revendication 22, la MO-CSI comportant une clé de service et une adresse d'une Fonction de commande de service, SCF, pour Système mondial de communications mobiles, GSM.

26. Procédé selon la revendication 22, comportant en outre une étape consistant à identifier la phase de CAMEL prise en charge par le HPMN (104).

27. Procédé selon la revendication 22, comportant en outre une étape consistant à maintenir des informations sur les phases de CAMEL prises en charge par au moins un HPMN (104).

28. Procédé selon la revendication 22, l'enregistrement d'abonné itinérant entrant comprenant en outre Numéro d'annuaire international d'abonné de station mobile, MSISDN, un HLR (118) de HPMN, un VLR (114) de VPMN, des phases de CAMEL prises en charge par au moins un HPMN et des CSI.

29. Procédé selon la revendication 22, la détection comportant une étape consistant à déterminer si la MO-CSI de l'abonné itinérant entrant est défini dans l'enregistrement d'abonné itinérant entrant en réaction à une Mise à jour de position, LUP, réussie de l'abonné itinérant entrant.

30. Procédé selon la revendication 22, la MO-CSI comportant au moins un élément parmi une O-CSI, des critères de TDP pour O-CSI, une CSI de service supplémentaire, SS, et une CSI de Fanion d'information de traduction, TIF, s'il est déterminé que le HPMN (104) prend en charge la phase 1 de CAMEL ou la phase 2 de CAMEL.

31. Procédé selon la revendication 22, la MO-CSI comportant au moins un élément parmi une O-CSI, des critères de TDP pour O-CSI, une D-CSI de Service à numéroter, une SS-CSI, une CSI de Terminaison de réseau visité, VT, des critères de TDP pour VT-CSI, une SMS-CSI de Service de messages courts, une M-CSI de gestion de mobilité et une TIF-CSI, s'il est déterminé que le HPMN (104) prend en charge la phase 3 de CAMEL.

32. Procédé selon la revendication 22, la fourniture comportant une étape consistant à envoyer de manière autonome des Données d'insertion d'abonné, ISD, de Sous-système d'application mobile, MAP, afin de fournir au moins la MO-CSI générée de l'abonné itinérant entrant au VLR (114) de VPMN.

33. Procédé selon la revendication 32, les ISD de MAP étant émises en utilisant l'IMSI de l'abonné itinérant entrant.

34. Procédé selon la revendication 22, comportant en outre une étape consistant à mettre en oeuvre les services de commande d'appel pour l'abonné itinérant entrant.

35. Procédé selon la revendication 34, le transfert de la commande d'appel se faisant via un Point de détection de lancement, IDP, de Sous-système d'application CAMEL, CAP.

36. Procédé selon la revendication 22, comportant en outre une étape consistant à émettre une traduction en numéro long lorsque le numéro appelé par l'abonné itinérant entrant est un code abrégé, l'émission étant effectuée par un noeud de service.

37. Procédé selon la revendication 34, comportant en outre une étape consistant à émettre une traduction en numéro corrigé lorsque le numéro appelé par l'abonné itinérant entrant est un numéro invalide, l'émission étant effectuée par un noeud (402) de service.

38. Procédé selon la revendication 22, comportant en outre une étape consistant à modifier la capacité de commande d'appel de l'abonné itinérant entrant pour un service à numéros locaux prépayés.

39. Procédé selon la revendication 22, comportant en outre une étape consistant à attribuer un numéro local prépayé à l'abonné itinérant lorsque la commande d'appel de l'abonné itinérant entrant est transmise à un noeud (402) de service.

40. Procédé selon la revendication 22, comportant en outre une étape consistant à déterminer si un compte local prépayé de l'abonné itinérant entrant doit ou non être débité pour l'appel.

41. Procédé selon la revendication 22, comportant en outre une étape consistant à déterminer si un numéro d'HPMN ou le numéro local prépayé doit être présenté en tant qu'identifiant de l'appelant à une partie réceptrice.

42. Procédé selon la revendication 22, comportant en outre une étape consistant à attribuer un Numéro d'abonné mobile itinérant, MSRN, au VMSC (114) du VPMN en vue d'un routage optimal de l'appel de l'abonné itinérant entrant, l'attribution étant effectuée par un noeud de service.

43. Procédé selon la revendication 22, comportant en outre une étape consistant à attribuer un numéro de routage au VMSC (114) du VPMN en vue d'une garantie d'Identification de la ligne appelante, CLI, de l'abonné itinérant entrant, l'attribution étant effectuée par un noeud (402) de service.

44. Procédé selon la revendication 22, comportant en outre une étape consistant à communiquer une alerte d'appel manqué à une partie réceptrice, la communication de l'alerte d'appel manqué étant effectuée par un noeud (402) de service.

45. Procédé selon la revendication 22, comportant en outre une étape consistant à configurer au moins un VMSC (114) de VPMN de façon à transférer la commande d' appel de l'abonné itinérant entrant au noeud (402) de service en vue de la gestion des fraudes.

46. Procédé selon la revendication 22, l'étape consistant à déterminer si la génération de la MO-CSI est requise comportant les étapes consistant à déterminer si la génération du profil de déclenchement du VPMN de Réseau intelligent, IN, est requise pour l'abonné itinérant entrant ;
et le procédé comportant en outre les étapes consistant à :
générer le profil de déclenchement du VPMN de Réseau intelligent, IN, de l'abonné itinérant entrant si nécessaire.

47. Procédé selon la revendication 46, la fourniture comportant une étape consistant à envoyer de manière autonome des Données d'insertion d'abonné, ISD, de Sous-système d'application mobile, MAP, afin de fournir au moins le profil de déclenchement du VPMN de Réseau intelligent, IN, de l'abonné itinérant entrant au VLR (114) de VPMN.

48. Progiciel informatique comportant un support utilisable par ordinateur comprenant un code de programme utilisable par ordinateur destiné à réaliser toutes les étapes de revendications quelconques parmi les revendications 22, 23, 26, 27, 29-32, 34 et 36-44.

49. Progiciel informatique selon la revendication 48 lorsqu'elle est subordonnée à la revendication 22, comportant en outre un code de programme utilisable par ordinateur destiné à configurer au moins un centre de commutation du VPMN (102) pour transférer une commande d'appel de l'abonné itinérant entrant à un noeud (402) de service.
